# EUROPEAN PATENT SPECIFICATION

(11) **EP 4 695 081 B1**
(45) Date of publication and mention of the grant of the patent: **09.12.2026**
(21) Application number: 24723817.3
(22) Date of filing: 02.05.2024
(51) Int. Cl.: B31B 70/10, B31B 70/26, B31B 70/62, B31B 70/64, B31B 70/94, B31B 155/00, B31B 160/20, B31B 160/30, B31B 170/10, B31B 170/30

(54) **SYSTEM AND METHOD FOR MANUFACTURING A STRIP ELEMENT**
SYSTEM UND VERFAHREN ZUR HERSTELLUNG EINES STREIFENELEMENTS
SYSTÈME ET PROCÉDÉ DE FABRICATION D'UN ÉLÉMENT DE BANDE

(43) Date of publication of application: 18.02.2026
(73) Proprietor: P & G IP GmbH, 70378 Stuttgart (DE)
(72) Inventor: FOERSTER, Egon, 76744 Woerth (DE); REINER, Stefan, 71563 Affalterbach (DE); SCHIMMELPFENG, Dirk, 71686 Remseck (DE)
(74) Representative: Schott, Jakob Valentin
(86) International application number: PCT/EP2024/062089
(87) International publication number: WO 2025/228525

(56) References cited:
- FR-A1- 2 765 518
- GB-A- 527 211
- US-A- 4 910 911
- US-A1- 2008 276 529

## Description

The rooting of cuttings nowadays takes place millionfold within the scope of the vegetative propagation of ornamental and agricultural crops. For this purpose, the cuttings are usually planted in a moist substrate in order to develop roots therein. As substrate, for example, soil, perlite, vermiculite, coir, mineral wool, or expanded clay pellets can be used. The cuttings are usually first cultivated in small containers, such as the containers disclosed in US 2011/0258926 A1. After the first roots have developed, the cuttings are transplanted into larger containers, in which they may later also be transported to customers. The plants are then further cultivated by the customers in yet other containers until they are ready for sale.

The described traditional process of cultivating cuttings is relatively lengthy and also entails losses, since not all cuttings develop as planned. It is therefore desirable to use another way of rooting and cultivating cuttings which on the one hand reduces the outlay in the cultivation of cuttings and on the other hand yields better results, such as, for example, larger and more stable plants and fewer losses. Further, the implemented way of rooting and cultivating the cuttings should be environmentally friendly, in particular with regard to the creation of waste materials.

In this context, some proposals have been made to produce rooted cuttings from unrooted cuttings without the help of a substrate. For example, EP 3 790 376 B1 discloses a method for the substrate-free rooting of a plurality of unrooted cuttings in cavities arranged successively one after another in a longitudinal direction of an elongate strip element. This document focuses on how to use the strip element rather than how to manufacture the same.

US 2008/276529 A1 discloses a method for manufacturing a protective device for container-grown seedlings. The method includes laying down a contiguous length of a first laminar film; positioning a plurality of spaced rods of defined length atop the length of first film; laying down a contiguous length of a second laminar film atop the first film and the spaced rods; adhering the first and the second films to form a seam along a congruent edge thereof beyond the reach of the rods and along plural spaced apart seams between the rods, the plural spaced apart seams extending from the congruent edge like teeth of a comb, thereby to form a contiguous laminate; and removing the rods from between the seams to form individuated substantially sealed plural pockets defined by the seams, the pockets being configured to receive therein root balls of container-grown seedlings.

FR 2 765 518 A1 discloses a paper container fabrication method. The container has a front face and a rear face which are both rectangular in shape and have the same height and width. These faces are connected together at their edges directly in their upper part, and connected together indirectly at their edges in their upper part through a folded base sheet. Two containers are made simultaneously and connected together at their base. They are made from a lower band of paper material that has a width corresponding to the sum of the heights of the rear face of the two containers. An intermediate band is also used together with an upper band. The bands are assembled using heat or adhesive to form the containers which are then separated one from the other using a cutter.

GB 527 211 A relates to processes and machines for applying and drying adhesive. An adhesive coating is applied to articles such as the sealing- flap portions of envelope blanks by applying consecutively to the article while it is in motion first a moist adhesive and then a dry powdered adhesive, and either smoothing out the adhesive mixture by sliding pressure or removing surplus powder by wiping action or both.

US 4 910 911 A discloses a tape or packaged tape provided along the length thereof with pockets disposed transversely to the tape and with a desired spacing, said pockets being open at the top and the bottom and containing plants such as seedlings and beddingplants ready for transplantation together with the pockets as a continuous tape. The pockets comprise two wall-forming thin layers of material fixed to each other at intervals and being adapted for the supply and regulation of the air and water necessary for the development and growth of the plants inside the packaged tape without the coexistence of any further growth medium thereabout.

There is still a need for a method and system that enable, in an efficient and reliable manner, manufacturing a strip element for use in rooting of a plurality of unrooted cuttings.

In view of the above, a system configured to manufacture a strip element, and a method for manufacturing a strip element are provided. The strip element may be configured for use in rooting of a plurality of unrooted cuttings.

According to the present disclosure, the strip element forms a plurality of pockets (which may also be referred to as empty pouches or empty bags) arranged successively one after another in a longitudinal direction of the strip element. The strip element forming the plurality of empty pockets may be the one and only structural element to be used for producing the rooted cuttings therein. The strip element has a longitudinal dimension and a transverse dimension, and extends longitudinally in the longitudinal dimension along the longitudinal direction and transversely in the transverse dimension along a transverse direction.

Each pocket has an opening through which an unrooted cutting can be inserted for rooting within said pocket. Each pocket has a width along the longitudinal direction of the strip element, and a depth along the transverse direction of the strip element. The opening of each pocket may be arranged at a top side (e.g., facing the transverse direction of the strip element). Each pocket may have a bottom side opposite the top side. The bottom side may be at least partially or fully closed.

The strip element comprises a first wall-forming member and a second wall-forming member. The strip element, by way of its wall-forming members, may form the boundaries of each empty pocket or pouch. The first wall-forming member of the strip element may be essentially planar whereas the second wall-forming member may be bulged to shape the pockets.

The first wall-forming member has first overlapping portions that overlap (e.g., in the transverse direction and in the longitudinal direction) with and are (e.g., adhesively) fixed to second overlapping portions of the second wall-forming member to delimit the plurality of pockets (e.g., at least in the longitudinal direction and optionally in the transverse direction such as at the bottom side of each pocket). The first wall-forming member and the second wall-forming member are fixed to each other (e.g., only) via the first and second overlapping portions, which may be arranged at least in part longitudinally adjacent each pocket to thus separate adjacent pockets from one another. The first overlapping portions and the second overlapping portions may delimit the plurality of pockets by forming the outer contours of each pocket (e.g., in the longitudinal direction and optionally in the transverse direction). Each pocket may be bordered by a seam formed by the first and second overlapping portions. A closed or partly closed bottom side of each pocket may be obtained by fixing the first and second wall-forming members to each other not only in areas longitudinally adjacent the pockets, but also in those areas where the bottom side shall later remain closed.

The first wall-forming member has third overlapping portions that overlap (e.g., in the transverse direction and in the longitudinal direction) with and are (e.g., predominantly) spaced apart from fourth overlapping portions of the second wall-forming member. The third overlapping portions and the fourth overlapping portions may be spaced apart from one another to thereby form the openings of the plurality of pockets (e.g., such that an unrooted or rooted cutting can be inserted through the respective opening).

The third overlapping portions and the fourth overlapping portions form sidewalls of the plurality of pockets. The side walls of each pocket may extend between the seam bordering the respective pocket and formed by the first and second overlapping portions. The third overlapping portions may be spaced apart from the second wall-forming member and the fourth overlapping portions may be spaced apart from the first wall-forming member. The third overlapping portions may not be (e.g., directly) attached to the second wall-forming member and the fourth overlapping portions may not be (e.g., directly) attached to the first wall-forming member.

The first, second and third overlapping portions may be lie essentially within a same plane, whereas the second wall-forming member (e.g., the fourth overlapping portions thereof) may at least partially extend out of said plane.

The second wall-forming member may be arranged to (e.g., at least partly, fully or not fully) overlap the first wall-forming member in the longitudinal direction and to (e.g., at least partly, fully or not fully) overlap the first wall-forming member in the transverse direction of the strip element. In one example, the second wall-forming member is arranged to at least partly overlap the first wall-forming member in the longitudinal direction and to not fully overlap the first wall-forming member in the transverse direction of the strip element. The first wall-forming member may extend past the second wall-forming member in the transverse direction of the strip element at the top side of each pocket and/or at the bottom side of each pocket.

The two wall-forming members may fully overlap each other in the longitudinal direction in areas of the strip element where pockets are present, and at least partly overlap each other in the longitudinal direction in the remaining areas of the strip element. Moreover, the two wall-forming members may be arranged such that the second wall-forming member does not fully overlap the first wall-forming member in a transverse direction of the strip element. That is, the first wall-forming member may extend past the second wall-forming member in the transverse direction of the strip element at the top side of each pocket to create a guiding area just above each pocket, which guiding area serves to facilitate inserting an unrooted cutting into the pocket by simplifying the process of widening the opening at the top side of each pocket. This applies to both manual and automated insertion of unrooted cuttings into the pockets. For example, a finger or similar element of an automated inserting device may be guided by the guiding area into the top side opening of any given pocket, and may then be manipulated to widen said top side opening to allow easy access to that pocket, with a view to enable quick and successful insertion of unrooted cuttings into the pockets. The guiding area created by the first wall-forming member extending past the second wall-forming member in the transverse direction of the strip element at the top side of each pocket may have a width in the transverse direction of the strip element ranging from several millimeters to a few centimeters, as desired in any given application. Generally, the width of the guiding area in the transverse direction of the strip element will be chosen to be as small as possible, and as large as needed to ensure that the process of inserting unrooted cuttings make take place quickly and reliably. For example, the width of the guiding area in the transverse direction of the strip element may be in the range of from 2 mm to 2 cm.

Each wall-forming member may be a separate element. At least one of the first and second wall-forming members may consist of more than just one layer, for example two or three layers. To obtain a structurally stable strip element, the first and second wall-forming members are fixed to each other via the first and second overlapping portions, which are at least arranged adjacent to each pocket, e.g. as seen in a longitudinal direction of the strip element. The first and second overlapping portions may thus provide the desired structural stability and at the same time physically delimit each of the plurality of pockets at each (e.g., longitudinal and optionally bottom) side thereof. Further, the first and second overlapping portions may create a desired spacing in the longitudinal direction between successive pockets.

The strip element may be formed at least in part of biodegradable material. The strip element may consist essentially of biodegradable material. By "formed at least in part of biodegradable material " we mean that for example some adhesive bonding may be used in forming the strip element, wherein the adhesive or glue may or may not be fully biodegradable. Of course, a fully biodegradable adhesive should preferably be used. Preferably, the term "biodegradable" as used herein is understood to mean that the materials used for forming the strip element will biologically degrade within a period of no longer than 50 days, and more preferably will biologically degrade within a period of no longer than 28 days, most preferably within a period of about 10 days. Ideally, the materials used for forming the strip element will slowly degrade when exposed to water or an aqueous solution.

For example, the biodegradable material has a liquid retaining capacity of at least about 100 g liquid per 100 g of biodegradable material dry weight. Whatever materials are being used in generating the first and second wall-forming members, the resulting wall-forming member may be water-resistant, but water- and air-permeable and, optionally, have a liquid retaining capacity of at least about 100g liquid per 100g of biodegradable material dry weight. In other words, the resulting wall-forming member may be able to retain at least its own dry weight of liquid, and preferably at least twice or three times its own dry weight of liquid (which means a retaining capacity of at least about 200g liquid per 100g of biodegradable material dry weight, and preferably at least about 300g liquid per 100g of biodegradable material dry weight). This would enable the resulting strip element to soak up and retain enough liquid and associated nutrients to ensure rooting of the unrooted cuttings once they have been placed into the pockets. The strip element may be designed such that it is able to absorb the required amount of liquid quickly, that is, within a period of from a few seconds to no more than a few minutes. The liquid retaining characteristics of the strip element may be achieved, for example, by means of cellulose as a constituent of the material used in making the wall-forming members. Both the first wall-forming member and the second wall-forming member may thus be paper fiber webs, preferably based on cellulose fibers. However, other or additional substances may also be used, for example so-called superabsorbers as well as plastic fibres or natural fibres. Water-resistant here means that the resulting strip element does not dissolve in water or does not degrade too quickly under the exposure of water. Materials to be used in making the wall-forming members can be paper-like (with or without perforations), film-like (in particular perforated), fabric-like or nonwoven-like. As material for the wall-forming member, in addition to the materials used for producing paper, also (e.g., at least essentially biodegradable) plastic materials and natural fibres can be considered. Composite materials may also be used. The wall-forming member may be permeable for liquid (e.g., heat-activatable) adhesive or liquified (e.g., heat-activatable) adhesive.

The empty pockets created by joining the first and second wall-forming members to each other may be at least partly closed at the bottom side and appropriately sized to accommodate at least one unrooted cutting. In one variant, the empty pockets created by joining the first and second wall-forming members are fully closed at the bottom side.

Depending on the type of unrooted cuttings to be processed, a size of each pocket may either be smaller (if unrooted cuttings having a thin stem shall be processed) or larger (if unrooted cuttings to be processed have a thicker stem). Moreover, the size of each pocket may be designed such that unrooted cuttings inserted into associated pockets will be self-retained in those pockets. More specifically, the strip element may be provided in such a form that each cutting is reliably retained by itself in the associated pocket of the strip element. This may be achieved for example by appropriately dimensioning the pockets in accordance with the particular application, such that a certain clamping force is exerted on a cutting positioned in a pocket by the first and second wall-forming members. In order that the further development of the cuttings proceeds as uniformly as possible, the cuttings used may all be of the essentially same size and maturity.

For example, as seen in the longitudinal direction of the strip element, the length of material of the second wall-forming member used in forming a pocket of the plurality of empty pockets exceeds the length of material of the first wall-forming member used in forming the pocket, preferably by at least 5% to 10%, 20% or even 30%, depending on the size of the pocket needed for a particular application. By using a defined slightly increased amount of material for the second wall-forming member in the longitudinal direction of the strip element when forming the pockets, each pocket bulges slightly outwardly on the side of the second wall-forming member, easing the process of inserting an unrooted cutting into the pocket and helping in obtaining an appropriately sized pocket dimensioned to exert a desired amount of clamping force onto an unrooted cutting that has been inserted into the pocket. The length of material of the second wall-forming member used in forming a pocket of the plurality of empty pockets may exceed the length of material of the first wall-forming member used in forming the said pocket by at least 2% to at most 30%, and preferably to at most 20%, 10% or 5%.

The shape of each pocket provided by the strip element may be one of essentially rectangular and essentially square. By "essentially rectangular" and "essentially square" we mean that the shape of each pocket, pouch or bag may have corners, that are more or less rounded. Alternatively, the shape of each pocket may taper from its opening at the top side of the strip element towards the opposite bottom side of the pocket. The degree of taper may vary according to the desired application, and may be any of a slight taper (e.g., 1-10°), a modest taper (e.g., 11-30°), and a pronounced taper (e.g., above 30°).

The pockets may have at least one similar geometrical property (e.g., width and/or depth and/or shape). The pockets may be arranged in a periodic pattern and/or with equal relative distances along the longitudinal direction of the strip element. For example, a spacing, in the longitudinal direction of the strip element, between midpoints of consecutive pocket widths is constant, regardless of the individual pocket width. Such constant spacing between pocket width midpoints is desirable and advantageous when processing strip elements by means of automated machinery. Moreover, such constant spacing between pocket width midpoints allows for a space saving arrangement of strip elements filled with cuttings during rooting and subsequent cultivation. In other words, such constant spacing between pocket width midpoints results in a constant grid dimension, which is advantageous in that it facilitates for example automated processing and space-saving rooting and cultivation.

According to the present disclosure, the system comprises a pressing unit and a spacer unit.

The pressing unit is configured to receive the first wall-forming member and the second wall-forming member. The pressing unit may be configured to receive the first and second wall-forming member as separate strips and/or layered on top of one another. The pressing unit may be configured to receive the first and second wall-forming member with the wall-forming members overlapping one another in both the longitudinal and the transverse direction.

The pressing unit is further configured to (e.g., selectively) press (e.g., only) the first overlapping portions against (e.g., only) the second overlapping portions (e.g., to fix the first overlapping portions to the second overlapping portions). This may include actively moving the first overlapping portions onto the second overlapping portions arranged in a joining plane, actively moving the second overlapping portions onto the first overlapping portions arranged in a joining plane, or moving both the first overlapping portions and the second overlapping portions into a joining plane. That is, in case a component A is described as being pressed against a component B herein, this may comprise moving one or both components against the other.

The spacer unit is configured to temporarily (e.g., and selectively) space (e.g., only) the third overlapping portions a predefined distance apart from (e.g., only) the fourth overlapping portions. The spacer unit may be configured to ensure (e.g., provide) a predefined distance between the third and fourth overlapping portions and/or a predefined size of the opening of each pocket and/or a predefined length of material of the second wall-forming member forming each pocket.

The pressing unit and the spacer unit may be arranged to work in unison to produce the strip element. The pressing unit and the spacer unit may be arranged in a fixed spatial relationship to one another. The pressing unit may be configured to contact at least one of the first overlapping portions and the second overlapping portions while the spacer unit contacts at least one of the third overlapping portions and the fourth overlapping portions adjacent the at least one of the first overlapping portions and the second overlapping portions. The pressing unit may be configured to contact the first and second overlapping portions bordering a given pocket while the spacer unit contacts the third and fourth overlapping portions forming the sidewalls of said pocket.

The pressing unit may be configured to fix the first overlapping portions to the second overlapping portions by selectively activating an (e.g., heat-activatable) adhesive (e.g., pre-) deposited on the first overlapping portions and/or the second overlapping portions. The pressing unit may be configured to press the first overlapping portions against the second overlapping portions such that the adhesive is only activated between the first overlapping portions and the second overlapping portions.

Activating the adhesive may comprise heating the adhesive and/or liquifying the adhesive. The adhesive may be (e.g., homogeneously) deposited (e.g., by the system or in advance) on the wall-forming member(s), for example on (e.g., an entire) one of two opposing surfaces of one or both wall-forming members.

The first overlapping portions and/or the second overlapping portions may be made from a porous or fibrous material that may be permeable for liquid adhesive or liquified adhesive. The first wall forming-member and/or the second wall forming-member may be made from a porous or fibrous material that may be permeable for liquid adhesive or liquified adhesive. The pressing unit may be configured to press the first overlapping portions against the second overlapping portions such that the (e.g., liquid or liquefied) adhesive (e.g., selectively) permeates (e.g., only) through the first overlapping portions and/or the second overlapping portions.

The pressing unit is configured to sequentially press the first overlapping portions against the second overlapping portions. In other words, the pressing unit may be configured to press one first overlapping portion after another against corresponding second overlapping portions. In this case, one may say that the pressing unit is configured to press the first wall-forming member against the second wall-forming member section by section. The pressing unit may be configured to only press a part of the first overlapping portions (e.g., exactly one first overlapping portion or a section thereof) to a corresponding part of the second overlapping portions (e.g., exactly one second overlapping portion or a section thereof). This sequential pressing differs from implementations in which all first overlapping portions are pressed onto all second overlapping portions simultaneously.

The first overlapping portions and/or the second overlapping portions may be planar and/or lie in a same plane. The pressing unit may be configured to press planar sections of the first wall-forming member and the second wall-forming member together, thereby defining the first overlapping portions and the second overlapping portions.

The spacer unit is configured to sequentially space the third overlapping portions the predefined distance apart from the fourth overlapping portions while the pressing unit sequentially presses the first overlapping portions against the second overlapping portions. In other words, the spacer unit is configured to space one third overlapping portion after another from corresponding fourth overlapping portions or vice versa. In this case, one may say that the spacer unit is configured to space the first wall-forming member from the second wall-forming member section by section. The spacer unit may be configured to only space a part of the third overlapping portions (e.g., exactly one third overlapping portion or a section thereof) from a corresponding part of the fourth overlapping portions (e.g., exactly one fourth overlapping portion or a section thereof). This sequential spacing differs from implementations in which all third overlapping portions are actively spaced from all fourth overlapping portions at the same time.

The system may be configured such that the first wall-forming member and the second wall-forming member are moved along a common process direction (e.g., while the pressing unit sequentially presses the first overlapping portions against the second overlapping portions and while the spacer unit sequentially spaces the third overlapping portions the predefined distance apart from the fourth overlapping portions). The common process direction may correspond to the longitudinal direction (e.g., of the wall-forming members and/or the strip element). The system may be configured such that the second wall-forming member is received by and/or fed into the pressing unit and/or the spacer unit at a faster rate than the first wall-forming member. The system may be configured such that the first wall-forming member and the second wall-forming member are moved (e.g., pulled) along the common process direction by the pressing unit and/or the spacer unit.

The spacer unit may comprise at least one spacer (e.g., exactly one or more than one spacer), which may also be referred to as a finger. Each spacer may be configured to define the predefined distance and/or the predefined size of the opening of at least one pocket and/or the predefined length of material of the second wall-forming member forming (e.g., the) at least one pocket. The spacer unit may be configured to temporarily insert the at least one spacer between one or more of the third overlapping portions and the corresponding fourth overlapping portions (e.g., from a direction differing from the common process direction) to sequentially space said third overlapping portion(s) apart from the fourth overlapping portion(s) (e.g., while the pressing unit sequentially presses the first overlapping portions against the second overlapping portions). Each spacer may be configured to keep one pocket open at a time, for example by blocking an interior volume of said pocket while the seam around said pocket is formed by the pressing unit. The pressing unit may be configured to contact the first and second overlapping portions bordering a given pocket while the spacer unit holds a spacer between the third and fourth overlapping portions forming the sidewalls of said pocket. Each spacer may be configured to define an interior volume of one of the plurality of pockets of the manufactured strip element. The spacer unit may be configured to move the at least one spacer along the transverse direction towards the first and second wall-forming member and between a pair of a third and a fourth overlapping region.

The spacer unit may comprise multiple spacers. The spacer unit may be configured to insert the multiple spacers sequentially (e.g., one after another and/or one at a time) between the third overlapping portions and the fourth overlapping portions (e.g., while the pressing unit sequentially presses the first overlapping portions against the second overlapping portions). Each pocket may be associated with a different one of the multiple spacers. Exactly one spacer may be used per pocket upon forming said pocket.

The spacer unit may comprise a central (e.g., circular) element configured to (e.g., during operation of the system), rotate around a first axis. The first axis may be orthogonal to the common process direction. The first axis may be orthogonal to the longitudinal direction and/or the transverse direction of at least one of the first wall-forming member, the second wall-forming member and the strip element. Each of the multiple spacers may be attached to the central element and extend radially outward relative to the first axis. For example, the central element and the spacers of the spacer unit are formed as one integral component. That is, the spacers and the central element may be formed monolithically. The central element and the spacers may extend within a same plane (e.g., normal to the first axis). A top surface or a bottom surface of the central element and the spacers may lie in the joining plane. The central element and the spacers may be formed from a single piece of cut (e.g., planar, non-bent) sheet metal. Each spacer may be essentially flat and/or have an essentially uniform thickness. It is also possible for the thickness of each spacer to decrease radially outwards (e.g., at least in a distalmost portion of the respective spacer such as a distal tip).

The central element and the spacers may form a toothed wheel, with the teeth of the toothed wheel corresponding to the spacers and the rim of the toothed wheel corresponding to the central element. In difference to radially narrowing teeth of common cogwheels, the spacers may be formed differently. For example, each spacer comprises (i) a radially elongate connection section attached to the central element, and (ii) a distal tip at a radial (e.g., radially outermost) end of the connection section, the distal tip being wider (e.g., along the circumferential direction and/or when viewed along the first axis) than the connection section.

Each distal tip may have a rounded or circular outline (e.g., when viewed along the first axis). That is, each spacer may have an outline (e.g., when viewed along the first axis) that comprises a curved or circular segment at the distal tip of the respective spacer. Each spacer may be lollipop-shaped.

Each connection section may have a concave outline (e.g., when viewed along the first axis). Each connection section may comprise a concave portion adjacent its distal tip. Each spacer may be formed such that an outline of its connection section continually transitions into the outline of its distal tip without corners.

The pressing unit may comprise a first roller and a second roller. The first roller may be configured to rotate around a first roller axis and the second roller may be configured to rotate around a second roller axis. The first and second roller axes may be parallel to one another and/or parallel to the transverse direction and/or orthogonal to the first axis. The first roller and the second roller may be pre-tensed toward one another. The system may comprise at least one spring configured to bias the first roller against the second roller or vice versa.

The first roller and the second roller may be configured to form a roller press. The roller press may be configured to sequentially press the first overlapping portions against the second overlapping portions while the first wall-forming member and the second wall-forming member pass through the roller press (e.g., along the common process direction). The pressing unit may be configured to receive the first and second wall-forming member, layered on top of one another, between the first roller and the second roller. The roller press may be configured to draw the first and second wall-forming member into the roller press. In other words, the roller press may be configured to be self-feeding. The system may be configured such that the first wall-forming member is fed into the roller press at a different (e.g., lower) speed than the second wall-forming member.

At least one roller, selected from the first roller and the second roller, may comprise at least one (e.g., relative to the roller axis) radially lowered pocket-forming portion and at least one (e.g., relative to the roller axis) radially elevated press portion configured to press at least one of the first overlapping portions of the first wall-forming member against at least one of the second overlapping portions of the second wall-forming member. Said at least one roller may be referred to as an embossing roller or a structured roller. If only one of the rollers (e.g., a roller configured to come into contact with the first wall-forming member) is such an embossing roller, the other one of the rollers (e.g., the roller configured to come into contact with the second wall-forming member) may be a smooth roller, i.e., have a smooth outer surface.

Each pocket-forming portion may comprise an insertion opening accessible from one or both axial directions of the at least one roller. The insertion opening may be configured to overlap a pocket opening and/or receive one of the spacers upon movement of the first and second wall-forming members through the roller press.

The radially elevated press portion may extend (e.g., continually or intermitted) axially back and forth along a circumferential direction around the at least one roller. In this case, one may say that the radially elevated press portion is essentially meander-shaped.

For example, each one of the radially elevated press portions partially encloses a respective one of the radially lowered pocket-forming portions in a circumferential and/or axial direction of the at least one roller. The radially elevated press portion may be configured to define the form of the seam(s) of the strip element. The shape of the seam(s) of the strip element may correspond to a shape of (e.g., a planar projection or imprint of) a radially outermost surface of the at least one radially elevated press portion. The seam may be meander-shaped. The seam may in this case run in the longitudinal direction between two consecutive pockets near or at the open top side of each pocket, then run down along one side of the pocket and across the bottom side of said pocket, thus forming a pocket that is fully closed at its bottom side, and then run up along the other side of the pocket towards the open top side of the pocket, thus delimiting the pocket at its two sides, and then run in the longitudinal direction towards the next pocket, and so on.

The spacer unit may be configured to insert the spacers (e.g., one by one) between the first roller and the second roller, in particular through the insertion openings of the pocket-forming portions. The spacer unit may be configured to insert the spacers temporarily, so it may be configured to remove inserted spacers again (e.g., after the pocket held open by a spacer has been formed). The spacer unit may be configured to temporarily insert the at least one spacer between the first wall-forming member and the second wall-forming member (e.g., and between the first roller and the second roller) through the insertion opening into the at least one radially lowered pocket-forming portion to sequentially space the third overlapping portions apart from the fourth overlapping portions while the pressing unit sequentially presses the first overlapping portions against the second overlapping portions. The system may be configured such that spacers of the spacer unit mesh with the press portion(s) by extending into the pocket-forming portions (e.g., without direct contact to the press portions). Generally speaking, the system may be configured such that the spacers of the spacer unit mesh with an embossing roller of the roller press. The system may be configured such that the spacers intertwine with the radially elevated press portions (e.g., while the first and second rollers and the central element rotate).

The system may further comprise actuation means configured to rotate at least two components selected from the central element, the first roller and the second roller with fixed rotational speeds relative to one another. The actuation means may comprise one or more (e.g., electric) motors. The at least two components may be coupled to one another via a (e.g., fixed gear rate) transmission.

The system may further comprise a heating unit configured to heat at least one part of the pressing unit, which part of the pressing unit is configured to contact the first overlapping portions and/or the second overlapping portions to press the first overlapping portions against the second overlapping portions. The heating unit may comprise a heating light arranged to irradiate a surface of one or both rollers of the roller press. Other heating means such as heating wires or heated air fans may be used in addition or alternatively thereto as part of the heating unit.

The system may further comprise an adhesive deposition unit arranged upstream of the pressing unit and configured to (e.g., sequentially) deposit a heat-activatable adhesive on at least the first overlapping portions of the first wall-forming member and/or at least the second overlapping portions of the second wall-forming member. The adhesive deposition unit may be configured to deposit the adhesive on a surface of one of the first and the second wall-forming member that, after production of the strip element, faces a surface of the other one of the first and the second wall-forming member. Alternatively, or in addition, the first and/or second wall-forming member may be pre-coated with the heat-activatable adhesive. The adhesive may be biodegradable.

The system may further comprise an adhesive removal unit arranged downstream of the pressing unit and configured to remove heat-activatable adhesive that has not been activated. The adhesive removal unit may be configured to remove non-activated adhesive at least from the pockets of the produced strip element. The adhesive removal unit may comprise a suction or blowing device. The system may be configured to re-use the adhesive removed by the adhesive removal unit for feeding the adhesive deposition unit.

The system may further comprise a feeding unit configured to provide the pressing unit with the first and second wall-forming member. The feeding unit may be configured to store the first wall-forming member on a first spool and the second wall-forming member on a second spool. The feeding unit may be configured to pretense the first and/or second wall-forming member by exerting a (e.g., predefined) pulling force on the first and/or second wall-forming member in the upstream direction (e.g., against the common process direction). The feeding unit may be configured to guide the first and second wall-forming member such that they are stacked on top of one another when reaching the pressing unit.

The system may further comprise a collection unit configured to collect the strip element. The collection unit may comprise a third spool configured to roll up the strip element. The collection unit may be configured to tense the strip element by exerting a (e.g., predefined) pulling force on the strip element in the downstream direction (e.g., along the common process direction).

The system may further comprise a cutting unit configured to transversely cut or perforate the produced strip element (e.g., into sections having a predefined length and/or comprising a predefined number of pockets). The cutting unit may be arranged downstream of the adhesive removal unit.

To avoid unnecessary repetitions, the following description of the method for manufacturing the strip element does not repeat all features discussed for the system above. It is to be understood that the system is configured to perform the method, and the method is performed by the system. That is, the features described herein with reference to the system also apply to the method and vice versa. Therefore, in case indefinite articles are used in the subsequent passages describing the method, the concerned features may, but need not, correspond to the similarly-named features introduced above with reference to the system.

According to the present disclosure, the method comprises receiving, by a pressing unit, the first wall-forming member and the second wall-forming member. The method further comprises pressing, by the pressing unit, the first overlapping portions against the second overlapping portions while temporarily spacing, by a spacing unit, the third overlapping portions a predefined distance apart from the fourth overlapping portions.

The first overlapping portions are sequentially pressed against the second overlapping portions. The third overlapping portions are sequentially spaced the predefined distance apart from the fourth overlapping portions while the first overlapping portions are pressed against the second overlapping portions.

The first wall-forming member and the second wall-forming member may be moved along a common process direction while the first overlapping portions are sequentially pressed against the second overlapping portions and while the third overlapping portions are sequentially spaced the predefined distance apart from the fourth overlapping portions.

The predefined distance may be defined by at least one spacer of the spacer unit, wherein the at least one spacer may be temporarily inserted between the third overlapping portions and the fourth overlapping portions from a direction differing from the common process direction to sequentially space the third overlapping portions apart from the fourth overlapping portions while the first overlapping portions are sequentially pressed against the second overlapping portions. The at least one spacer may comprise multiple spacers and the multiple spacers may be sequentially inserted between the third overlapping portions and the fourth overlapping portions while the first overlapping portions are sequentially pressed against the second overlapping portions. For example, each spacer defines an interior volume of one of the plurality of pockets of the manufactured strip element. The spacer unit may comprise a central element which, during operation of the system, rotates around a first axis orthogonal to the common process direction, wherein each of the multiple spacers is attached to the central element and extends radially outward relative to the first axis. Each spacer may comprise a radially elongate connection section attached to the central element of the spacer unit, and comprises a distal tip at a radial end of the connection section, the distal tip being wider than the connection section. The distal tip may have a circular outline.

The first overlapping portions may be sequentially pressed against the second overlapping portions by a roller press, formed by a first roller and a second roller of the pressing unit, while the first wall-forming member and the second wall-forming member pass through the roller press along the common process direction. At least one of the first overlapping portions of the first wall-forming member may be pressed against at least one of the second overlapping portions of the second wall-forming member by at least one radially elevated press portion of at least one roller, selected from the first roller and the second roller, that further comprises at least one radially lowered pocket-forming portion. For example, each pocket-forming portion comprises an insertion opening accessible from one or both axial directions of the at least one roller. The radially elevated press portion may extend axially back and forth along a circumferential direction around the at least one roller. The radially elevated press portion may partially enclose the radially lowered pocket-forming portion in a circumferential and/or axial direction of the at least one roller.

The at least one spacer may be temporarily inserted between the first wall-forming member and the second wall-forming member through the insertion opening into the at least one radially lowered pocket-forming portion to sequentially space the third overlapping portions apart from the fourth overlapping portions while the first overlapping portions are sequentially pressed against the second overlapping portions. At least two components selected from the central element, the first roller and the second roller may be rotated with fixed rotational speeds relative to one another.

The method may further comprise heating at least one part of the pressing unit, which part of the pressing unit contacts the first overlapping portions and/or the second overlapping portions to press the first overlapping portions against the second overlapping portions. For example, the method further comprises sequentially depositing a heat-activatable adhesive on at least the first overlapping portions of the first wall-forming member and/or at least the second overlapping portions of the second wall-forming member. The method may comprise removing heat-activatable adhesive that has not been activated. The method may comprise re-using the removed adhesive for a subsequent deposition thereof on at least the first overlapping portions of the first wall-forming member and/or at least the second overlapping portions of the second wall-forming member.

Exemplary embodiments will now be described with reference to the drawings, wherein similar reference signs denote the same functional or structural features, and wherein:
- Fig. 1: shows a strip element in accordance with the present disclosure;
- Fig. 2: shows a system a schematic diagram of a system in accordance with the present disclosure;
- Fig. 3: shows a perspective view of a system in accordance with the present disclosure;
- Fig. 4: shows a left-side view of the system of Fig. 3;
- Fig. 5: shows a front-side view of the system of Fig. 3;
- Fig. 6: shows a right-side view of the system of Fig. 3;
- Fig. 7: shows a back-side view of the system of Fig. 3;
- Fig. 8: shows a variant of a first roller in accordance with the present disclosure;
- Fig. 9: shows a first variant of a spacer unit in accordance with the present disclosure;
- Fig. 10: shows a second variant of a spacer unit in accordance with the present disclosure; and
- Fig. 11: shows a flow diagram of a method in accordance with the present disclosure.

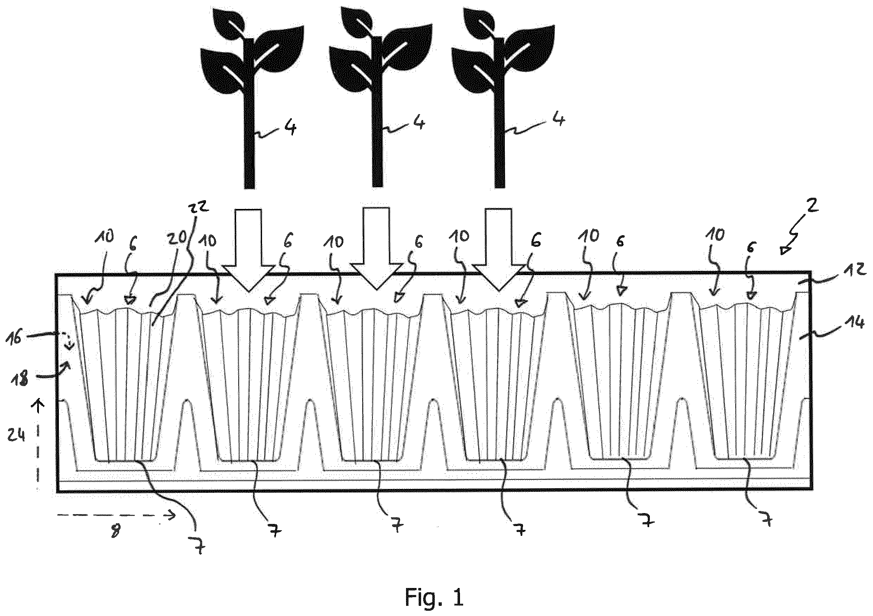

Fig. 1 shows a strip element 2 in accordance with the present disclosure. The strip element is configured to be used in rooting of a plurality of unrooted cuttings 4. In particular, the strip element 2 forms a plurality of pockets 6 arranged successively one after another in a longitudinal direction 8 of the strip element 2. Each pocket 6 has a bottom side 7 and, on a transversely opposite end, an upper opening 10 through which an unrooted cutting 4 can be inserted for rooting within said pocket 6. The strip element 2 comprises a first wall-forming member 12 and a second wall-forming member 14. The first wall-forming member 12 has first overlapping portions 16 that overlap with and are fixed to second overlapping portions 18 of the second wall-forming member 14 to delimit the plurality of pockets 6. One may say that the first and second overlapping portions 16, 18 form a seam delimiting the pockets 6. The first wall-forming member 12 further has third overlapping portions 20 that overlap with and are spaced apart from fourth overlapping portions 22 of the second wall-forming member 14. The third overlapping portions 20 and the fourth overlapping portions 22 form sidewalls of the plurality of pockets 6.

Depending on the type of the first and second wall-forming members 12, 14 used in making the strip element 12, 14, a thickness of the strip element 2 forming the plurality of empty pockets 6 will preferably be in the range of about 0.5 mm to about 5 mm. Within the scope of experimental tests, favourable results have been obtained with first and second wall-forming members 12, 14 each having an air permeability in the range of from 1100 to 1200 l/m²s. It has further been found to be advantageous that the first and second wall-forming members 12, 14 each have a tensile strength of from 13.0 N to 16.0 N/15 mm in the machine direction (based on the process of paper production) and from 7.0 N to 9.5 N/15 mm transversely to the machine direction (again based on the paper production process). A material which is particularly suited for making the first and second wall-forming members is a product marketed by the Danish company Ellepot A/S under the trade name Ellepot^{®} Organic 10 weeks. Another material which is particularly suited for making the first and second wall-forming members is a product marketed by the Swedish company BCC AB under the name BIOBASED FIBERCELL PAPER. These materials are in particular permeable for liquid adhesive, at least when the adhesive is forced into the respective material due to an external pressure.

Further details on the strip element 2 and in particular regarding the shape of the pockets 6 and the seam have been generally described above and are avoided at this point to avoid unnecessary repetition.

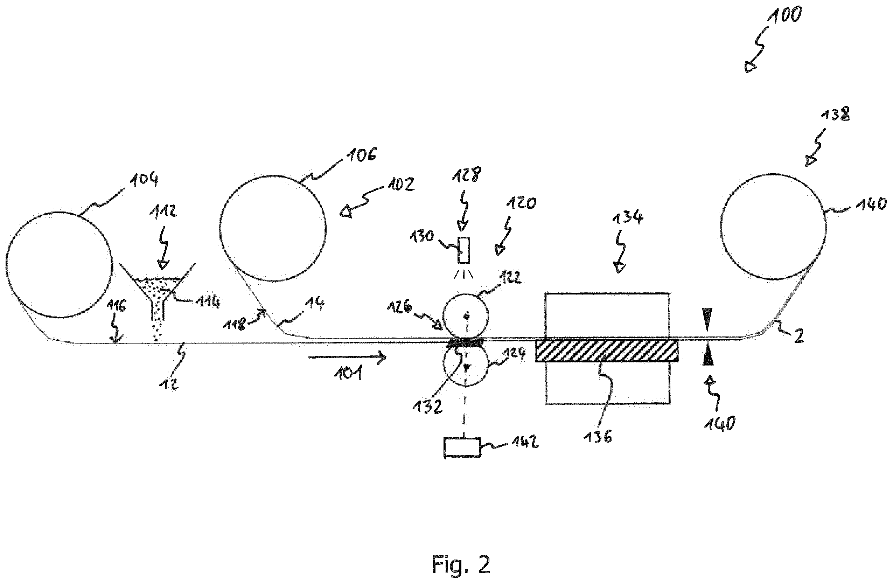

Fig. 2 shows a schematic diagram of a system 100 in accordance with the present disclosure. The system 100 is configured to produce a strip element such as the strip element 2 by selectively joining the first wall-forming member 12 and the second wall-forming member 14 together while moving the same along a common process direction 101.

The system 100 comprises a feeding unit 102 store the first wall-forming member on a first spool 104 and the second wall-forming member on a second spool 106. The spools are pre-tensed to exert a pulling force on the first and second wall-forming members 12, 14 in the upstream direction 108, i.e., against the common process direction/downstream direction 110. The feeding unit 102 is configured to arrange and guide the first and second wall-forming member 12, 14 such that they are stacked on top of one another.

The system further comprises an adhesive deposition unit 112 arranged downstream of the feeding unit 102 and configured to evenly deposit a heat-activatable (e.g., powder-based) adhesive 114 on an entire surface 116 of the first wall-forming member 12 that during later processing partially contacts a surface 118 of the second wall-forming member 14. The adhesive 114 may also be referred to as a hotmelt adhesive. The glue may be a biodegradable glue, such as for example a starch-based glue.

The system further comprises a pressing unit 120 comprising a first roller 122 and a second roller 124 forming a roller press 126. The pressing unit 120 is configured to sequentially press the first overlapping portions 16 against the second overlapping portions 18 to join the first and second wall-forming members 12, 14 together while the first wall-forming member 12 and the second wall-forming member 14 pass through the roller press 126 along the common process direction 101.

In addition, the system comprises a heating unit 128 configured to heat at least one part of the roller 108 and/or 110, which part is configured to contact the first overlapping portions 16 and/or the second overlapping portions 18 to press the first overlapping portions 16 against the second overlapping portions 18. The heating unit may comprise one or more (e.g., infrared) heating lights 130 irradiating one or both rollers 108, 110.

The system furthermore comprises a spacer unit 132 configured to temporarily and sequentially space the third overlapping portions 20 a predefined distance apart from the fourth overlapping portions 22, while the pressing unit 120 presses adjacent first overlapping portions 16 against the corresponding second overlapping portions 18. This may ensure that the pockets 6 have the required volume.

When not using the spacer unit 132, the first and second wall-forming members 12, 14 may be continuously layered and fixed on top of one another by the pressing unit 120, so the pockets 6, despite being delimited from one another in the longitudinal direction 8 and transverse direction 24, may not be able to be opened without deforming both the first and the second wall-forming member 12, 14 and/or breaking the seam between said members formed by the joined first and second overlapping portions 16, 18. The spacer unit 132 prevents a direct contact between the third and fourth overlapping portions 20, 22 upon formation of the pockets 6, which means the formed pockets 6 will have a predefined volume and may be accessed via their openings 10, potentially even without deforming the first wall-forming member 12.

The system further comprises an adhesive removal unit 134 arranged downstream of the pressing unit 120 and the spacer unit 132 and configured to remove heat-activatable adhesive 114 that has not been activated by the pressing unit 120. The adhesive removal unit 134 comprises a suction or blowing device 136 configured to suck or blow non-activated adhesive 114 out of the pockets 6 of the produced strip element 2.

The system further comprises a collection unit 138 configured to collect the strip element 2. The collection unit comprises a third spool 140 for rolling up the strip element 2. The third spool 140 is slightly pre-tensed to exert a pulling force on the strip element 2 in the downstream direction 101.

The system may further comprise a cutting unit 140 configured to transversely cut or perforate the produced strip element 2 (e.g., into sections having a predefined length and/or comprising a predefined number of pockets). The cutting unit 140 may be arranged downstream of the adhesive removal unit 134 and upstream of the collection unit 138.

The system further comprises actuation means 142 configured to rotate the first roller 122 and/or the second roller 124, and to additionally rotate components of the spacer unit 132, each with predefined and preferably fixed relative rotational speeds.

Further components and units may be added to the system 200 if desired, for example to post-treat the strip element 2, to automatically arrange cut sections of the strip element 2 in a growing container and/or to place unrooted cuttings in the pockets 6. It is also possible for the system 100 to not comprise one or more of the components shown in Fig. 1, for example one or more of the feeding unit 102, the adhesive deposition unit 112, the heating unit 128, the adhesive removal unit 134, the collection unit 138, the cutting unit 140 and the actuation means 142.

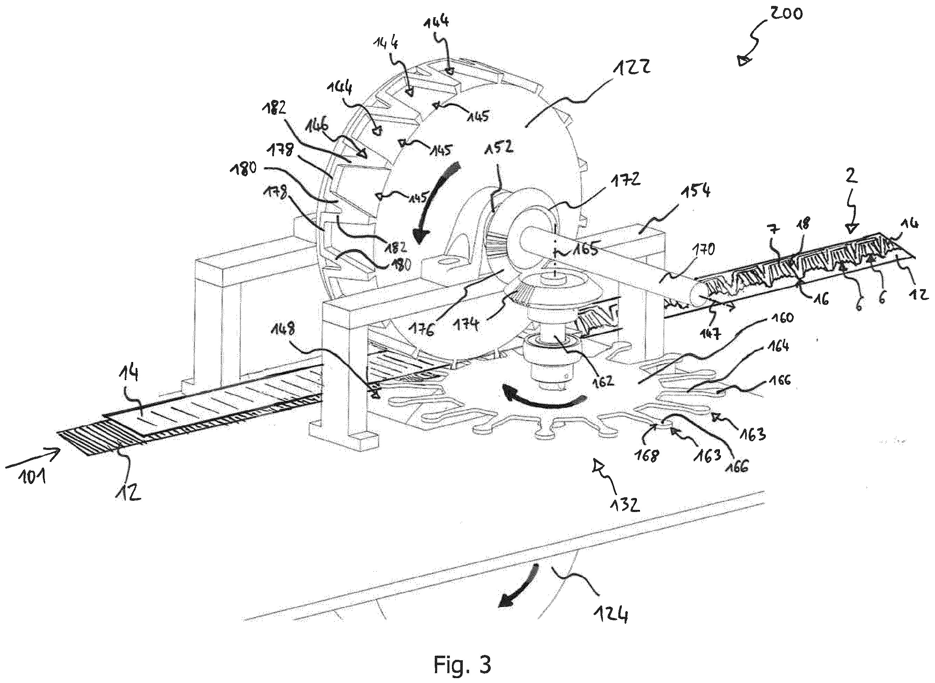

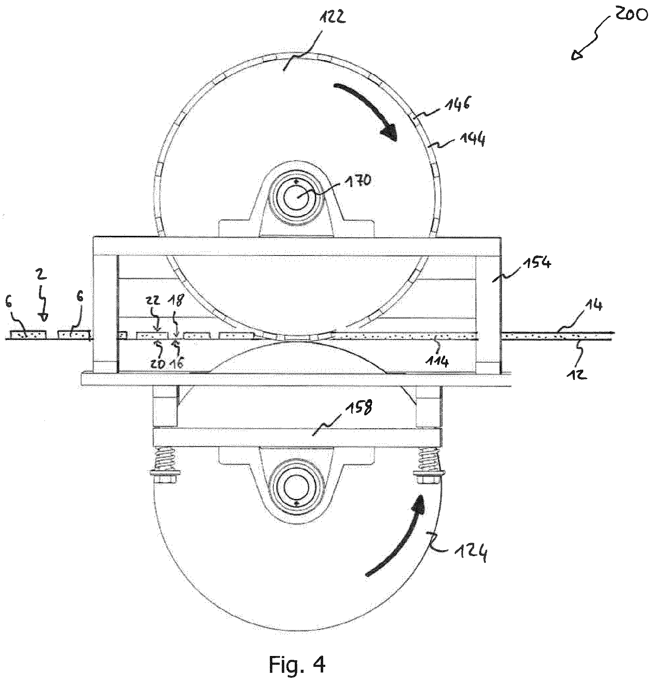

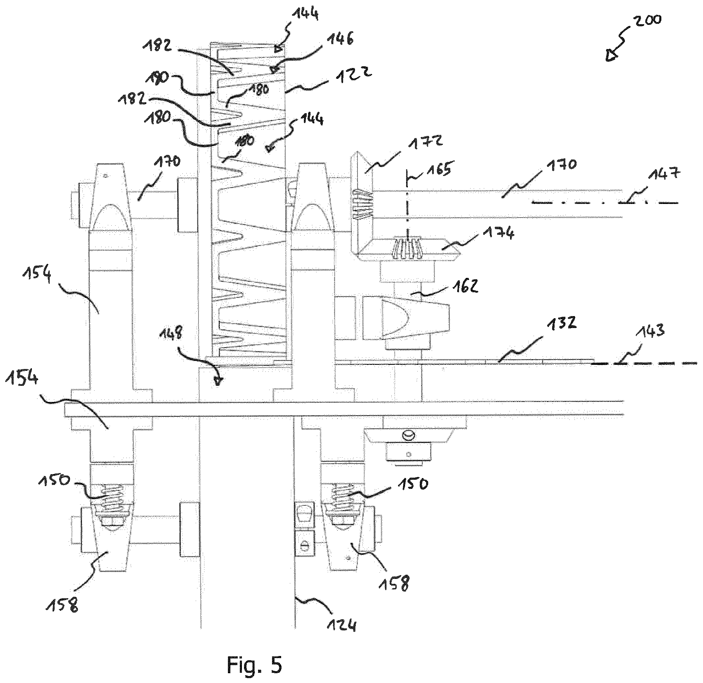

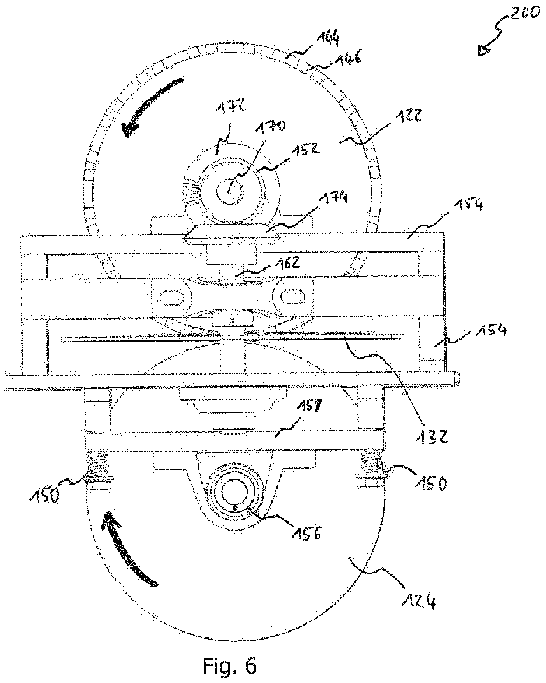

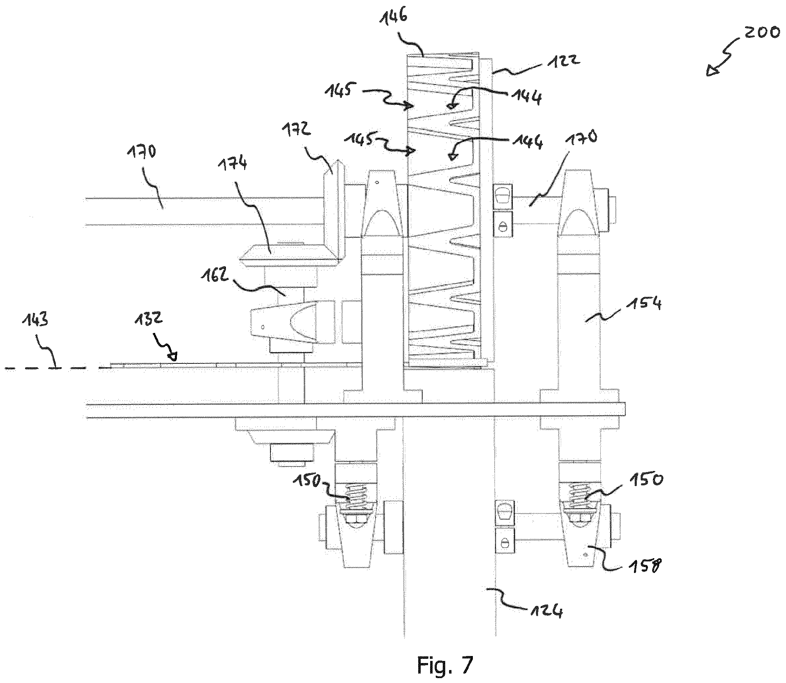

Figs. 3-7 show different views of a system 200 in accordance with the present disclosure, with movement directions in operation of the system 200 being indicated by solid arrows. This system 200 comprises the pressing unit 120 and the spacer unit 132, and may further comprise one or more of the feeding unit 102, the adhesive deposition unit 112, the heating unit 128, the adhesive removal unit 134, the collection unit 138, the cutting unit 140 and the actuation means 142. The system 200 or selected components thereof may be part of the system 100.

As can be seen, the first roller 122 of the system 200 comprises a plurality of radially lowered pocket-forming portions 144 delimited by a radially elevated press portion 146. The first roller 122 may thus me referred to as an embossing roller.

The roller 122 may comprise a radially inner center portion and a radially outer structured portion. The structured portion may comprise the portions 144, 146. The structured portion may be made from a metal or metal alloy. The inner portion may be made from a material having a comparatively lower heat capacitance, for example wood.

The press portion 146 is configured to press only the first overlapping portions 16 of the first wall-forming member 12 against only the second overlapping portions 18 of the second wall-forming member 14 by selectively pressing the second wall-forming member 14 onto the first wall-forming member 12 supported in the joining plane 143 by the outer circumferential surface of the second roller 124.

Each pocket-forming portion 144 comprises an insertion opening 145 that is open in an axial direction 147 of the roller 122 and thus axially accessible. The press portion 146 partially encloses each radially lowered pocket-forming portion 144 in a circumferential and axial direction of the first roller 122. The press portion 146 extends axially back and forth along a circumferential direction around the at least one roller, so it may be referred to as having an overall meandering shape. A shape of a radially outermost surface of the press portion 146, which corresponds to a press pattern of the embossing roller, corresponds to the shape of the seam between the first and second wall-forming member 12, 14 formed by the joined-together first and second overlapping portions 16, 18.

The press portion 146 of the roller 122 has circumferential sections 178 periodically arranged in the circumferential direction and extending along the circumferential direction. The circumferential sections 178 are configured to form the seam at the bottom of each pocket 6. The press portion 146 further has first axial sections 180 and second axial sections 182. The first axial sections 180 are configured to form the seam at a longitudinally left side of the pockets 6 and the second axial sections 182 are configured to form the seam at a longitudinally right side of the pockets 6. The axial sections 180 and 182 are tilted in opposite directions, thereby ensuring a shape of the produced pocket 6 that tapers from its opening 10 towards its bottom along the transverse direction 24.

The second roller 124 has a substantially smooth outer circumferential surface 148. In the illustrated example, the first and second roller 122, 124 have substantially similar diameters. The first roller 122 and the second roller 124 are pressed together by a spring force provided by springs 150. In the illustrated example, the first roller 122 is rotatably attached via bearings 152 to a frame 154 and the second roller 124 is rotatably attached via bearings 156 to a bracket 158 forced upwards towards the frame 154 by the springs 150. Thus, the first roller 122 and the second roller 124 are pre-tensed toward one another and form the roller press 126. In particular, the first roller 122 and the second roller 124 are pressed together with sufficient force to enable heat from the heated roller(s) to be transferred to the adhesive deposited on the wall-forming member 12, thereby melting the adhesive and ensuring that the so-liquified adhesive selectively permeates both wall-forming members 12, 14 in the first and second overlapping portions 16, 18. This ensures that the first and second overlapping portions 16, 18 are adhesively fixed together. The first roller 122 and the second roller 124 are pressed together with a lower force than would be required for cold pressure welding the first and second wall forming member 12, 14 together, if the materials of the first and second wall forming members 12, 14 even permit. For instance, in case the overlapping portions 16, 18 that are simultaneously pressed together by the rollers 122, 124 extend over an area of 3x40mm, the two rollers 122, 124 may be pre-tensed toward one another with a force of 100-300 N. It has been found that a pressure exerted on the pressed-together overlapping portions 16, 18 that lies between 500 and 2.500 kPa yields favorable results.

The spacer unit 132 comprises a central element 160 attached to an axle 162 extending along a first axis 165 that is orthogonal to the axial direction 147 of the first roller 122 and orthogonal to the process direction 101 at the roller press 126. The spacer unit 132 further comprises a plurality of finger-like spacers 163 extending radially outwards from the central element 160. The central element 160 and the spacers 163 extend in a common plane. A bottom surface of the central element 160 and the spacers 163 may be referred to as a joining plane 143 and may be configured to come into contact with the first wall-forming member 12 (e.g., within the roller press 126).

The spacer unit 132 is configured to temporarily insert the spacers 162 sequentially through a respective axial insertion opening 145 of the press portion 146 of the first roller 122. One may say that the spacers 163 mesh with the press portion 146 but remain contact-free thereto. The spacer unit 132 is arranged such that a spacer 163 is located between the third and fourth overlapping regions 20, 22 at the time the roller press 126 presses the first and second overlapping regions 16, 18 directly adjacent said third and fourth overlapping regions 20, 22 together. In other words, each pocket 6 is, during its formation in the roller press 126, kept open by a spacer 163 that guarantees a minimum volume of the pocket 6 by defining the predefined distance between the third and fourth overlapping portions 20, 22.

Each spacer 163 comprises a radially elongate connection section 164 attached to the central element 160. Each spacer 163 further comprises a distal tip 166 at a radial end of the connection section 164. The distal tip 166 is wider than the connection section in a circumferential direction of the central element 160 and has a circular outline 168 when viewed along the axle 162. The spacer 163 can thus be inserted in to the to-be-formed pocket 6 without pressing the first wall-forming member 12 or the second wall-forming member 14 against (e.g., radially protruding walls of the) press portion 146. That is, the particular shape of the spacers 163 in conjunction with the shape of the press portion 146 ensures that the wall-forming members 12, 14 are not damaged (e.g., by ripping) when passing through the roller press 126 and the spacer unit 132, while the third and fourth overlapping portions 20, 22 of the first and second wall-forming members 12, 14 are prevented from being joined together and while each pocket 6 is produced with a predefined volume.

To ensure that the spacers 163 reliably mesh with the press portion 146 of the first roller 122, the central element 160 and the first roller 122 are rotated such that the spacers 163 and the openings 154 move at similar speeds. To this end, the first roller 122 and the central element 160 are rotated at fixed relative rotational speeds by coupling a roller axle 170 attached to the first roller 122 and carrying a first gearwheel 172 to the axle 162 carrying a second gearwheel 174 via a fixed-gear transmission 176 formed by the gearwheels 172, 174. A motor (not shown) may be coupled to the axle 162 or the axle 170 to rotate both axles 162, 170 via the transmission 176.

Before the first and second wall-forming members 12, 14 are pressed together in the roller press 126, the surface 116 of the first wall-forming member 12 may be homogeneously coated with the heat-activatable adhesive 114. The adhesive 114 may be disposed onto the surface 116 by unit 112 in liquid or powder form. A surface of the first roller 122 may be heated. In particular, the press portion 146 may be heated, for example by the heating unit 128. As mentioned above, upon pressing the first and second overlapping portions 16, 18 together, the heat transferred through the second wall-forming member to the adhesive 114 selectively activates the adhesive to form the seam delimiting the pockets 6. Adhesive disposed on other portions of the first wall-forming member thereby remains inactivated and can be removed by adhesive removal unit 134.

Although Figs. 3-9 indicate that the first and second wall-forming members 12, 14 are arranged in parallel planes before being fed into the roller press 126, other variants are possible. For example, the second wall-forming member 14 may be guided to lie on the press portion 146 of the first roller 122 before such that the first wall-forming member 14 is moved into the joining plane 143 by the rotation of the first roller 122. The first wall-forming member 12 may similarly be guided to lie on the second roller 124, or may be guided to lie in the joining plane 143 before reaching the second roller 124.

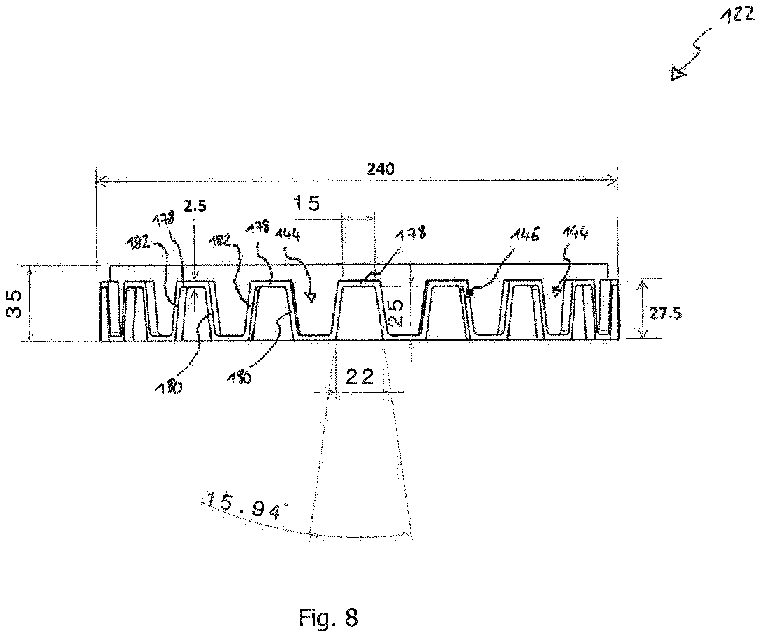

In Figs. 8-10, dimensions are indicated in millimeters. It is to be understood, however, that these examples are not limited to these particular dimensions and that other relative or absolute dimensions may be used depending on the strip element to be produced, in particular depending on the dimensions of the pockets 6 of the to-be-produced strip element. For example, if the press portion 146 extends radially from the first roller 122 by 5 mm, the spacer 163 may have a height, along the axis 162, of around 3 mm.

Fig. 8 shows a variant of the first roller 122. Compared with the first roller 122 shown in Figs. 3-7, a periodic longitudinal distance between midpoints of the pockets 6 relative to a longitudinal width of the respective pocket openings 10 is larger. The pockets 6 of strip element produced by the system 100, 200 when using the first roller 122 of Fig. 8 are spaced further apart from one another compared to a scenario in which the first roller 122 of Figs. 3-7 is used.

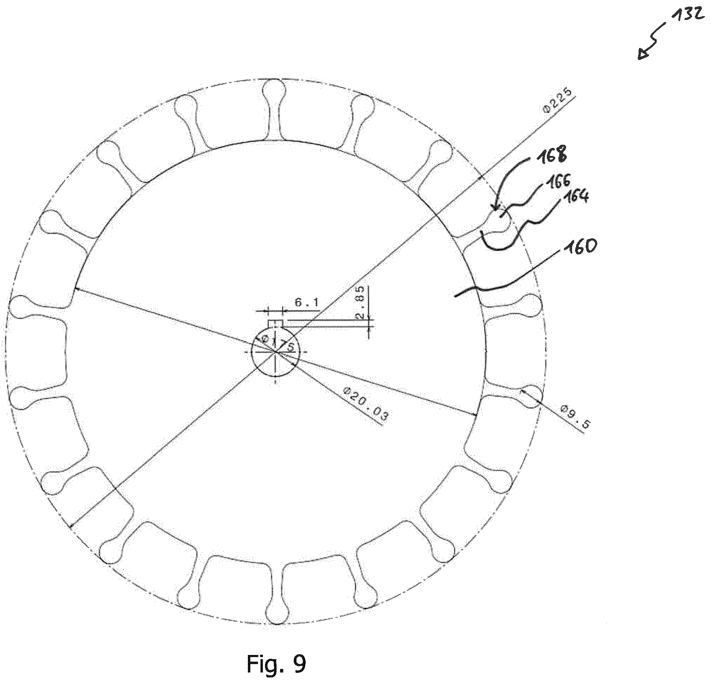

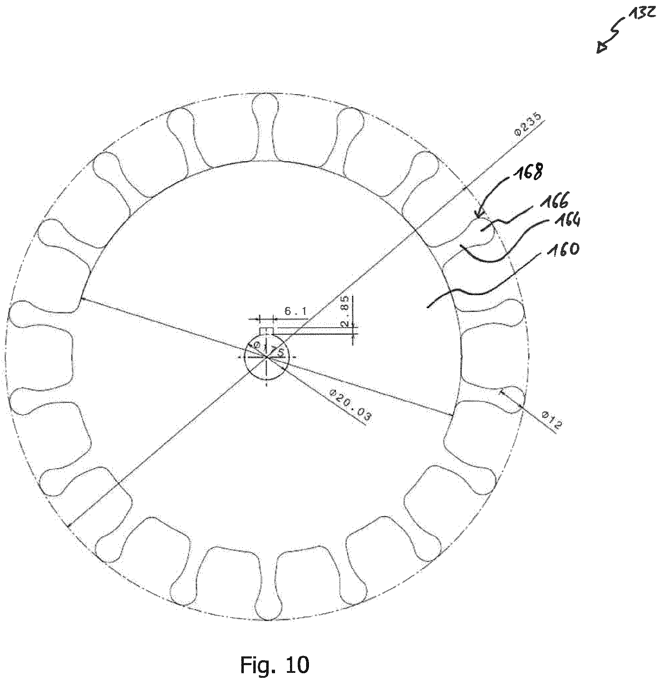

Fig. 9 shows a first variant of the spacer unit 132 and Fig. 10 shows a second variant of the spacer unit 132. The spacer unit 132 of the first variant is configured to produce smaller pockets 6 compared with the spacer unit 132 of the second variant. To this end, the diameter of the circular outline 168 of the distal tip 166 in the first variant (e.g., 9.5 mm) is smaller than in the second variant (e.g., 12 mm) and the spacers 163 in the first variant protrude less radially outward (e.g., by 50 mm) than in the second variant (e.g., by 60 mm). In both variants, the essentially planar spacer unit 132 may be made from a single sheet of 3 mm thick sheet metal.

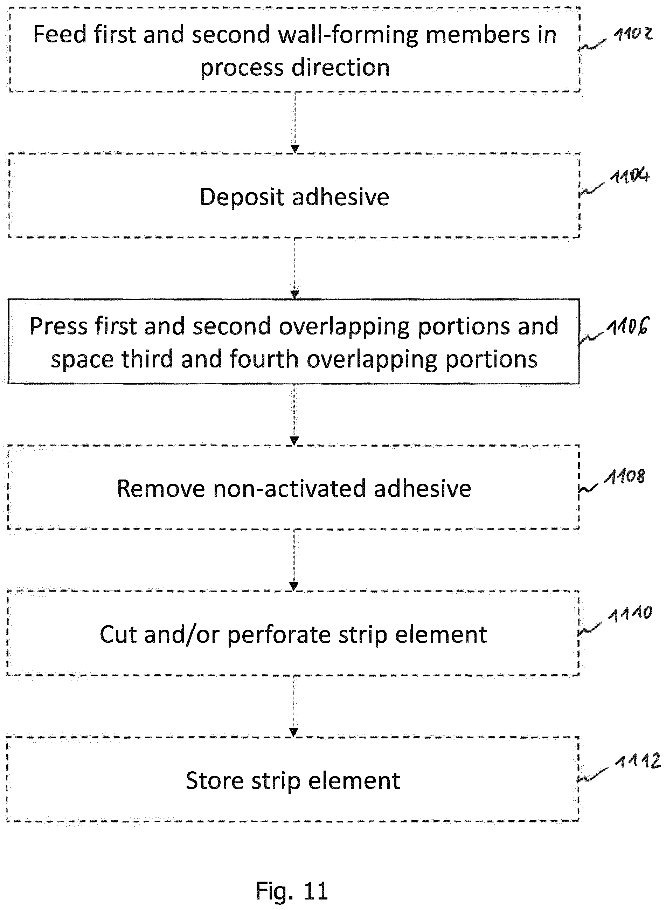

Fig. 11 shows a flow diagram of a method in accordance with the present disclosure. The method may be performed by the system 100 or 200. That is, the system 100 and/or 200 may be configured to perform said method. Optional steps are indicated in dashed boxes.

The method comprises a step 1102 in which the first and second wall-forming members 12, 14 are fed by the feeding unit 102 to move along the common process direction 110. As indicated above, the wall-forming members 12, 14 may be fed from respective spools 104, 106. The wall-forming members 12, 14 may be pulled by the roller press 126 along the common process direction 110.

In step 1104, the heat-activatable powder-form adhesive 114 is deposited on surface 116 of the first wall-forming member 12. The powder may be deposited in a uniform manner on the entire surface 116.

In step 1106, the first and second wall-forming members 12, 14 are received by the pressing unit 120 while they are aligned on top of one another, and the first and second overlapping portions 16, 18 are selectively pressed together by the pressing unit 120. At the same time, the third and fourth overlapping portions are temporarily spaced apart from one another by the spacer unit 132. In this manner, the strip element 2 having pockets 6 are formed while ensuring the pockets 6 are not closed accidentally while passing through the roller press 126.

The embossing roller 122 may be pre-heated to around 170 - 180°C. To this end, an infrared illumination device of the heating unit 128, having a maximum output power of 1 kW, may be operated at 85% its maximum output power, i.e., at 850 W, to heat up the roller 122. The smooth-surface roller 124 may be pre-heated to around 170°C. To this end, a heating fan of the hating unit 128, having a maximum output power of 2 kW, may be used at 90% its maximum output power, i.e., at 1800 W, to heat up the roller 124. Alternatively, another infrared illumination device of the heating unit 128 may be employed for heating up the roller 124. These temperatures depend on the type of adhesive used and should be selected to ensure that the adhesive between the first and second overlapping portions 16, 18 is activated while adhesive in other areas, in particular between the third and fourth overlapping portions 20, 22, remains inactivated. The processing speed may be chosen such that approximately one pocket 6 is formed per second (e.g., 3400 pockets per hour). For example, the first wall-forming member may pass through the roller press 126 at 2 m/min.

In step 1108, non-activated adhesive is removed from the strip element 2 by adhesive removal unit 134. For example, a suction device 136 may be used to suck powder-based adhesive 114 out of the pockets 6 of the strip element. The removed adhesive may be re-used in step 1104. This may result in a total use of 0.15 to 0.2 grams of adhesive per pocket.

In optional step 1110, the strip element 2 may be cut or perforated by cutting unit 140 to divide the strip element 2 into segments having a predefined, similar length and containing a predefined, similar number of pockets 6.

In step 1112, the so-produced strip element 2 is stored on third spool 140 of unit 138. The spool 140 may be pre-tensed to pull the strip element 2 out from the roller press 126.

The method may include further steps such as post-treating the strip element 2, arranging the strip element 2 in a grow box, placing unrooted cuttings 4 in the pockets 6 of the strip element 2

The present disclosure is not limited to the specific examples shown in the figures.

## Claims

1. A system (100; 200) configured to manufacture a strip element (2), the strip element (2) forming a plurality of pockets (6) arranged successively one after another in a longitudinal direction (8) of the strip element (2), each pocket (6) having an opening (10) through which an unrooted cutting (4) can be inserted for rooting within said pocket (6), the strip element (2) comprising a first wall-forming member (12) and a second wall-forming member (14), the first wall-forming member (12) having first overlapping portions (16) that overlap with and are fixed to second overlapping portions (18) of the second wall-forming member (14) to delimit the plurality of pockets (6), the first wall-forming member (12) having third overlapping portions (20) that overlap with and are spaced apart from fourth overlapping portions (22) of the second wall-forming member (14), the third overlapping portions (20) and the fourth overlapping portions (22) forming sidewalls of the plurality of pockets (6), the system (100; 200) comprising:
a pressing unit (120) configured to receive the first wall-forming member (12) and the second wall-forming member (14) and configured to press the first overlapping portions (16) against the second overlapping portions (18); and
a spacer unit (132) configured to temporarily space the third overlapping portions (20) a predefined distance apart from the fourth overlapping portions (22),
wherein the pressing unit (120) is configured to sequentially press the first overlapping portions (16) against the second overlapping portions (18), wherein the spacer unit (132) is configured to sequentially space the third overlapping portions (20) the predefined distance apart from the fourth overlapping portions (22) while the pressing unit sequentially presses the first overlapping portions (16) against the second overlapping portions (18).

2. The system (100; 200) of claim 1, wherein the pressing unit (120) is configured to fix the first overlapping portions (16) to the second overlapping portions (18) by selectively activating an adhesive deposited on the first overlapping portions (16) and/or the second overlapping portions (18).

3. The system (100; 200) of any one of claims 1 to 2, further comprising a heating unit (128) configured to heat at least one part of the pressing unit (120), which part of the pressing unit (120) is configured to contact the first overlapping portions (16) and/or the second overlapping portions (18) to press the first overlapping portions (16) against the second overlapping portions (18).

4. The system (100; 200) of any one of claims 1 to 3, further comprising an adhesive deposition unit (112) arranged upstream of the pressing unit (120) and configured to sequentially deposit a heat-activatable adhesive on at least the first overlapping portions (16) of the first wall-forming member (12) and/or at least the second overlapping portions (18) of the second wall-forming member (14).

5. The system of any one of claims 1 to 4, configured such that the first wall-forming member and the second wall-forming member are moved along a common process direction (101) while the pressing unit (120) sequentially presses the first overlapping portions (16) against the second overlapping portions (18) and while the spacer unit sequentially spaces the third overlapping portions (20) the predefined distance apart from the fourth overlapping portions (22), wherein the spacer unit (132) comprises at least one spacer (163) defining the predefined distance, wherein the spacer unit (132) is configured to temporarily insert the at least one spacer (163) between the third overlapping portions (20) and the fourth overlapping portions (22) from a direction differing from the common process direction (101) to sequentially space the third overlapping portions (20) apart from the fourth overlapping portions (22) while the pressing unit (120) sequentially presses the first overlapping portions (16) against the second overlapping portions (18).

6. The system (100; 200) of claim 5, wherein the at least one spacer (163) comprises multiple spacers (163) and the spacer unit (132) is configured to insert the multiple spacers (163) sequentially between the third overlapping portions (20) and the fourth overlapping portions (22) while the pressing unit (120) sequentially presses the first overlapping portions (16) against the second overlapping portions (18), wherein each spacer (163) is optionally configured to define an interior volume of one of the plurality of pockets (6) of the manufactured strip element (2).

7. The system (100; 200) of claim 6, wherein the spacer unit (132) comprises a central element (160) configured to, during operation of the system (100; 200), rotate around a first axis orthogonal to the common process direction (101), wherein each of the multiple spacers (163) is attached to the central element (160) and extends radially outward relative to the first axis (165), wherein each spacer (163) comprises:
a radially elongate connection section (164) attached to the central element (160) of the spacer unit (132); and
a distal tip (166) at a radial end of the connection section (164), the distal tip (166) being wider than the connection section (164).

8. The system (100; 200) of any one of claims 5 to 7, wherein the pressing unit (120) comprises a first roller (122) and a second roller (124) forming a roller press (126) configured to sequentially press the first overlapping portions (16) against the second overlapping portions (18) while the first wall-forming member (12) and the second wall-forming member (14) pass through the roller press (126) along the common process direction (101).

9. The system (100; 200) of claim 8, wherein at least one roller, selected from the first roller (122) and the second roller (124), comprises at least one radially lowered pocket-forming portion (144) and at least one radially elevated press portion (146) configured to press at least one of the first overlapping portions (16) of the first wall-forming member (12) against at least one of the second overlapping portions (18) of the second wall-forming member (14), wherein each pocket-forming portion (144) comprises an insertion opening (145) accessible from one or both axial directions of the at least one roller (122; 124), wherein the radially elevated press portion (146) extends axially back and forth along a circumferential direction around the at least one roller (122; 124), and/or wherein the radially elevated press portion (146) partially encloses the radially lowered pocket-forming portion (144) in a circumferential and/or axial direction of the at least one roller (122; 124).

10. The system (100; 200) of at least claims 5 and 9, wherein the spacer unit (132) is configured to temporarily insert the at least one spacer (163) between the first wall-forming member (12) and the second wall-forming member (14) through the insertion opening (145) into the at least one radially lowered pocket-forming portion (144) to sequentially space the third overlapping portions (20) apart from the fourth overlapping portions (22) while the pressing unit (120) sequentially presses the first overlapping portions (16) against the second overlapping portions (18).

11. A method for manufacturing a strip element (2), the strip element (2) forming a plurality of pockets (6) arranged successively one after another in a longitudinal direction (8) of the strip element (2), each pocket (6) having an opening (10) through which an unrooted cutting (4) can be inserted for rooting within said pocket (6), the strip element (2) comprising a first wall-forming member (12) and a second wall-forming member (14), the first wall-forming member (12) having first overlapping portions (16) that overlap with and are fixed to second overlapping portions (18) of the second wall-forming member (14) to delimit the plurality of pockets (6), the first wall-forming member (12) having third overlapping portions (20) that overlap with and are spaced apart from fourth overlapping portions (22) of the second wall-forming member (14), the third overlapping portions (20) and the fourth overlapping portions (22) forming sidewalls of the plurality of pockets (6), the method comprising:
receiving, by a pressing unit (120), the first wall-forming member (12) and the second wall-forming member (14); and
pressing (1106), by the pressing unit (120), the first overlapping portions (16) against the second overlapping portions (18) while temporarily spacing, by a spacing unit (132), the third overlapping portions (20) a predefined distance apart from the fourth overlapping portions (22), wherein the first overlapping portions (16) are sequentially pressed against the second overlapping portions (18), and wherein the third overlapping portions (20) are sequentially spaced the predefined distance apart from the fourth overlapping portions (22) while the first overlapping portions (16) are pressed against the second overlapping portions (18).

12. The method of claim 11, wherein the first overlapping portions (16) are fixed to the second overlapping portions (18) by selectively activating, by the pressing unit (120), an adhesive deposited on the first overlapping portions (16) and/or the second overlapping portions (18).

13. The method of any one of claims 11 to 12, further comprising:
heating at least one part of the pressing unit (120), which part of the pressing unit (120) contacts the first overlapping portions (16) and/or the second overlapping portions (18) to press the first overlapping portions (16) against the second overlapping portions (18).

14. The method of any one of claims 11 to 13, further comprising:
sequentially depositing (1104) a heat-activatable adhesive (114) on at least the first overlapping portions (16) of the first wall-forming member (12) and/or at least the second overlapping portions (18) of the second wall-forming member (14).

15. The method of any one of claims 11 to 14, wherein the first wall-forming member (12) and the second wall-forming member (14) are moved (1102) along a common process direction (101) while the first overlapping portions (16) are sequentially pressed against the second overlapping portions (18) and while the third overlapping portions (20) are sequentially spaced the predefined distance apart from the fourth overlapping portions (22), wherein the predefined distance is defined by at least one spacer (163) of the spacer unit (132), wherein the at least one spacer (163) is temporarily inserted between the third overlapping portions (20) and the fourth overlapping portions (22) from a direction differing from the common process direction (101) to sequentially space the third overlapping portions (20) apart from the fourth overlapping portions (22) while the first overlapping portions (16) are sequentially pressed against the second overlapping portions (18).

16. The method of claim 15, wherein the at least one spacer (163) comprises multiple spacers (163) and the multiple spacers (163) are sequentially inserted between the third overlapping portions (20) and the fourth overlapping portions (22) while the first overlapping portions (16) are sequentially pressed against the second overlapping portions (18), wherein each spacer (163) optionally defines an interior volume of one of the plurality of pockets (6) of the manufactured strip element (2).

17. The method of claim 16, wherein the spacer unit (132) comprises a central element (160) which rotates around a first axis (165) orthogonal to the common process direction (101), wherein each of the multiple spacers (163) is attached to the central element (160) and extends radially outward relative to the first axis (165), wherein each spacer (163) comprises a radially elongate connection section (164) attached to the central element (160) of the spacer unit (132), and comprises a distal tip (166) at a radial end of the connection section (164), the distal tip (166) being wider than the connection section (164).

18. The method of any one of claims 15 to 17, wherein the first overlapping portions (16) are sequentially pressed against the second overlapping portions (18) by a roller press (126), formed by a first roller (122) and a second roller (124) of the pressing unit (120), while the first wall-forming member (12) and the second wall-forming member (14) pass through the roller press (126) along the common process direction (101).

19. The method of claim 18, wherein at least one of the first overlapping portions (16) of the first wall-forming member (12) is pressed against at least one of the second overlapping portions (18) of the second wall-forming member (14) by at least one radially elevated press portion (146) of at least one roller, selected from the first roller (122) and the second roller (124), that further comprises at least one radially lowered pocket-forming portion (144), wherein each pocket-forming portion (144) comprises an insertion opening (145) accessible from one or both axial directions of the at least one roller (122; 124), wherein the radially elevated press portion (146) extends axially back and forth along a circumferential direction around the at least one roller (122; 124), and/or wherein the radially elevated press portion (146) partially encloses the radially lowered pocket-forming portion (144) in a circumferential and/or axial direction of the at least one roller (122; 124).

20. The method of at least claims 15 and 19, wherein the at least one spacer (163) is temporarily inserted between the first wall-forming member (12) and the second wall-forming member (14) through the insertion opening (145) into the at least one radially lowered pocket-forming portion (144) to sequentially space the third overlapping portions (20) apart from the fourth overlapping portions (22) while the first overlapping portions (16) are sequentially pressed against the second overlapping portions (18).

## Patentansprüche

1. System (100; 200), das dazu eingerichtet ist, ein Streifenelement (2) herzustellen, wobei das Streifenelement (2) eine Mehrzahl von Taschen (6) bildet, die in einer Längsrichtung (8) des Streifenelements (2) nacheinander angeordnet sind, wobei jede Tasche (6) eine Öffnung (10) aufweist, durch die ein unbewurzelter Steckling (4) zum Bewurzeln innerhalb der Tasche (6) eingeführt werden kann, wobei das Streifenelement (2) ein erstes wandbildendes Element (12) und ein zweites wandbildendes Element (14) umfasst, wobei das erste wandbildende Element (12) erste Überlappungsabschnitte (16) aufweist, die sich mit zweiten Überlappungsabschnitten (18) des zweiten wandbildenden Elements (14) überlappen und an diesen befestigt sind, um die Mehrzahl von Taschen (6) zu begrenzen, wobei das erste wandbildende Element (12) dritte Überlappungsabschnitte (20) aufweist, die sich mit vierten Überlappungsabschnitten (22) des zweiten wandbildenden Elements (14) überlappen und von diesen beabstandet sind, wobei die dritten Überlappungsabschnitte (20) und die vierten Überlappungsabschnitte (22) Seitenwände der Mehrzahl von Taschen (6) bilden, wobei das System (100; 200) umfasst:
eine Presseinheit (120), die dazu eingerichtet ist, das erste wandbildende Element (12) und das zweite wandbildende Element (14) aufzunehmen, und dazu eingerichtet ist, die ersten Überlappungsabschnitte (16) gegen die zweiten Überlappungsabschnitte (18) zu pressen; und
eine Abstandshaltereinheit (132), die dazu eingerichtet ist, die dritten Überlappungsabschnitte (20) vorübergehend um einen vorbestimmten Abstand von den vierten Überlappungsabschnitten (22) zu beabstanden,
wobei die Presseinheit (120) dazu eingerichtet ist, die ersten Überlappungsabschnitte (16) nacheinander gegen die zweiten Überlappungsabschnitte (18) zu pressen, wobei die Abstandshaltereinheit (132) dazu eingerichtet ist, die dritten Überlappungsabschnitte (20) nacheinander um den vorbestimmten Abstand von den vierten Überlappungsabschnitten (22) zu beabstanden, während die Presseinheit die ersten Überlappungsabschnitte (16) nacheinander gegen die zweiten Überlappungsabschnitte (18) presst.

2. System (100; 200) nach Anspruch 1, wobei die Presseinheit (120) dazu eingerichtet ist, die ersten Überlappungsabschnitte (16) an den zweiten Überlappungsabschnitten (18) zu befestigen, indem ein auf den ersten Überlappungsabschnitten (16) und/oder den zweiten Überlappungsabschnitten (18) aufgebrachter Klebstoff selektiv aktiviert wird.

3. System (100; 200) nach einem der Ansprüche 1 bis 2, ferner umfassend eine Heizeinheit (128), die dazu eingerichtet ist, mindestens einen Teil der Presseinheit (120) zu erwärmen, wobei der Teil der Presseinheit (120) dazu eingerichtet ist, die ersten Überlappungsabschnitte (16) und/oder die zweiten Überlappungsabschnitte (18) zu kontaktieren, um die ersten Überlappungsabschnitte (16) gegen die zweiten Überlappungsabschnitte (18) zu pressen.

4. System (100; 200) nach einem der Ansprüche 1 bis 3, ferner umfassend eine Klebstoffauftragseinheit (112), die stromaufwärts der Presseinheit (120) angeordnet und dazu eingerichtet ist, nacheinander einen wärmeaktivierbaren Klebstoff auf mindestens die ersten Überlappungsabschnitte (16) des ersten wandbildenden Elements (12) und/oder mindestens die zweiten Überlappungsabschnitte (18) des zweiten wandbildenden Elements (14) aufzubringen.

5. System nach einem der Ansprüche 1 bis 4, das derart eingerichtet ist, dass das erste wandbildende Element und das zweite wandbildende Element entlang einer gemeinsamen Prozessrichtung (101) bewegt werden, während die Presseinheit (120) die ersten Überlappungsabschnitte (16) nacheinander gegen die zweiten Überlappungsabschnitte (18) presst und während die Abstandshaltereinheit die dritten Überlappungsabschnitte (20) nacheinander um den vorbestimmten Abstand von den vierten Überlappungsabschnitten (22) beabstandet, wobei die Abstandshaltereinheit (132) mindestens einen Abstandshalter (163) umfasst, der den vorbestimmten Abstand festlegt, wobei die Abstandshaltereinheit (132) dazu eingerichtet ist, den mindestens einen Abstandshalter (163) vorübergehend aus einer von der gemeinsamen Prozessrichtung (101) abweichenden Richtung zwischen die dritten Überlappungsabschnitte (20) und die vierten Überlappungsabschnitte (22) einzuführen, um die dritten Überlappungsabschnitte (20) nacheinander von den vierten Überlappungsabschnitten (22) zu beabstanden, während die Presseinheit (120) die ersten Überlappungsabschnitte (16) nacheinander gegen die zweiten Überlappungsabschnitte (18) presst.

6. System (100; 200) nach Anspruch 5, wobei der mindestens eine Abstandshalter (163) mehrere Abstandshalter (163) umfasst und die Abstandshaltereinheit (132) dazu eingerichtet ist, die mehreren Abstandshalter (163) nacheinander zwischen die dritten Überlappungsabschnitte (20) und die vierten Überlappungsabschnitte (22) einzuführen, während die Presseinheit (120) die ersten Überlappungsabschnitte (16) nacheinander gegen die zweiten Überlappungsabschnitte (18) presst, wobei jeder Abstandshalter (163) optional dazu eingerichtet ist, ein Innenvolumen einer der Mehrzahl von Taschen (6) des hergestellten Streifenelements (2) festzulegen.

7. System (100; 200) nach Anspruch 6, wobei die Abstandshaltereinheit (132) ein zentrales Element (160) umfasst, das dazu eingerichtet ist, sich während des Betriebs des Systems (100; 200) um eine erste Achse (165) zu drehen, die orthogonal zu der gemeinsamen Prozessrichtung (101) verläuft, wobei jeder der mehreren Abstandshalter (163) an dem zentralen Element (160) angebracht ist und sich relativ zu der ersten Achse (165) radial nach außen erstreckt, wobei jeder Abstandshalter (163) umfasst:
einen in Radialrichtung länglichen Verbindungsabschnitt (164), der an dem zentralen Element (160) der Abstandshaltereinheit (132) angebracht ist; und
eine distale Spitze (166) an einem radialen Ende des Verbindungsabschnitts (164), wobei die distale Spitze (166) breiter als der Verbindungsabschnitt (164) ist.

8. System (100; 200) nach einem der Ansprüche 5 bis 7, wobei die Presseinheit (120) eine erste Walze (122) und eine zweite Walze (124) umfasst, die eine Walzenpresse (126) bilden, welche dazu eingerichtet ist, die ersten Überlappungsabschnitte (16) nacheinander gegen die zweiten Überlappungsabschnitte (18) zu pressen, während das erste wandbildende Element (12) und das zweite wandbildende Element (14) entlang der gemeinsamen Prozessrichtung (101) durch die Walzenpresse (126) hindurchlaufen.

9. System (100; 200) nach Anspruch 8, wobei mindestens eine Walze, ausgewählt aus der ersten Walze (122) und der zweiten Walze (124), mindestens einen radial abgesenkten taschenbildenden Abschnitt (144) und mindestens einen radial erhabenen Pressabschnitt (146) umfasst, der dazu eingerichtet ist, mindestens einen der ersten Überlappungsabschnitte (16) des ersten wandbildenden Elements (12) gegen mindestens einen der zweiten Überlappungsabschnitte (18) des zweiten wandbildenden Elements (14) zu pressen, wobei jeder taschenbildende Abschnitt (144) eine Einführöffnung (145) umfasst, die aus einer oder beiden axialen Richtungen der mindestens einen Walze (122; 124) zugänglich ist, wobei sich der radial erhabene Pressabschnitt (146) entlang einer Umfangsrichtung um die mindestens eine Walze (122; 124) axial hin und her erstreckt, und/oder wobei der radial erhabene Pressabschnitt (146) den radial abgesenkten taschenbildenden Abschnitt (144) in einer Umfangsrichtung und/oder einer axialen Richtung der mindestens einen Walze (122; 124) teilweise umschließt.

10. System (100; 200) nach zumindest den Ansprüchen 5 und 9, wobei die Abstandshaltereinheit (132) dazu eingerichtet ist, den mindestens einen Abstandshalter (163) vorübergehend zwischen das erste wandbildende Element (12) und das zweite wandbildende Element (14) durch die Einführöffnung (145) in den mindestens einen radial abgesenkten taschenbildenden Abschnitt (144) einzuführen, um die dritten Überlappungsabschnitte (20) nacheinander von den vierten Überlappungsabschnitten (22) zu beabstanden, während die Presseinheit (120) die ersten Überlappungsabschnitte (16) nacheinander gegen die zweiten Überlappungsabschnitte (18) presst.

11. Verfahren zum Herstellen eines Streifenelements (2), wobei das Streifenelement (2) eine Mehrzahl von Taschen (6) bildet, die in einer Längsrichtung (8) des Streifenelements (2) nacheinander angeordnet sind, wobei jede Tasche (6) eine Öffnung (10) aufweist, durch die ein unbewurzelter Steckling (4) zum Bewurzeln innerhalb der Tasche (6) eingeführt werden kann, wobei das Streifenelement (2) ein erstes wandbildendes Element (12) und ein zweites wandbildendes Element (14) umfasst, wobei das erste wandbildende Element (12) erste Überlappungsabschnitte (16) aufweist, die sich mit zweiten Überlappungsabschnitten (18) des zweiten wandbildenden Elements (14) überlappen und an diesen befestigt sind, um die Mehrzahl von Taschen (6) zu begrenzen, wobei das erste wandbildende Element (12) dritte Überlappungsabschnitte (20) aufweist, die sich mit vierten Überlappungsabschnitten (22) des zweiten wandbildenden Elements (14) überlappen und von diesen beabstandet sind, wobei die dritten Überlappungsabschnitte (20) und die vierten Überlappungsabschnitte (22) Seitenwände der Mehrzahl von Taschen (6) bilden, wobei das Verfahren umfasst:
Aufnehmen des ersten wandbildenden Elements (12) und des zweiten wandbildenden Elements (14) mittels einer Presseinheit (120); und
Pressen (1106), mittels der Presseinheit (120), der ersten Überlappungsabschnitte (16) gegen die zweiten Überlappungsabschnitte (18), während mittels einer Abstandshaltereinheit (132) die dritten Überlappungsabschnitte (20) vorübergehend um einen vorbestimmten Abstand von den vierten Überlappungsabschnitten (22) beabstandet werden, wobei die ersten Überlappungsabschnitte (16) nacheinander gegen die zweiten Überlappungsabschnitte (18) gepresst werden und wobei die dritten Überlappungsabschnitte (20) nacheinander um den vorbestimmten Abstand von den vierten Überlappungsabschnitten (22) beabstandet werden, während die ersten Überlappungsabschnitte (16) gegen die zweiten Überlappungsabschnitte (18) gepresst werden.

12. Verfahren nach Anspruch 11, wobei die ersten Überlappungsabschnitte (16) an den zweiten Überlappungsabschnitten (18) befestigt werden, indem mittels der Presseinheit (120) ein auf den ersten Überlappungsabschnitten (16) und/oder den zweiten Überlappungsabschnitten (18) aufgebrachter Klebstoff selektiv aktiviert wird.

13. Verfahren nach einem der Ansprüche 11 bis 12, ferner umfassend:
Erwärmen mindestens eines Teils der Presseinheit (120), wobei der Teil der Presseinheit (120) die ersten Überlappungsabschnitte (16) und/oder die zweiten Überlappungsabschnitte (18) kontaktiert, um die ersten Überlappungsabschnitte (16) gegen die zweiten Überlappungsabschnitte (18) zu pressen.

14. Verfahren nach einem der Ansprüche 11 bis 13, ferner umfassend:
nacheinander erfolgendes Aufbringen (1104) eines wärmeaktivierbaren Klebstoffs (114) auf mindestens die ersten Überlappungsabschnitte (16) des ersten wandbildenden Elements (12) und/oder mindestens die zweiten Überlappungsabschnitte (18) des zweiten wandbildenden Elements (14).

15. Verfahren nach einem der Ansprüche 11 bis 14, wobei das erste wandbildende Element (12) und das zweite wandbildende Element (14) entlang einer gemeinsamen Prozessrichtung (101) bewegt (1102) werden, während die ersten Überlappungsabschnitte (16) nacheinander gegen die zweiten Überlappungsabschnitte (18) gepresst werden und während die dritten Überlappungsabschnitte (20) nacheinander um den vorbestimmten Abstand von den vierten Überlappungsabschnitten (22) beabstandet werden, wobei der vorbestimmte Abstand durch mindestens einen Abstandshalter (163) der Abstandshaltereinheit (132) festgelegt wird, wobei der mindestens eine Abstandshalter (163) vorübergehend aus einer von der gemeinsamen Prozessrichtung (101) abweichenden Richtung zwischen die dritten Überlappungsabschnitte (20) und die vierten Überlappungsabschnitte (22) eingeführt wird, um die dritten Überlappungsabschnitte (20) nacheinander von den vierten Überlappungsabschnitten (22) zu beabstanden, während die ersten Überlappungsabschnitte (16) nacheinander gegen die zweiten Überlappungsabschnitte (18) gepresst werden.

16. Verfahren nach Anspruch 15, wobei der mindestens eine Abstandshalter (163) mehrere Abstandshalter (163) umfasst und die mehreren Abstandshalter (163) nacheinander zwischen die dritten Überlappungsabschnitte (20) und die vierten Überlappungsabschnitte (22) eingeführt werden, während die ersten Überlappungsabschnitte (16) nacheinander gegen die zweiten Überlappungsabschnitte (18) gepresst werden, wobei jeder Abstandshalter (163) optional ein Innenvolumen einer der Mehrzahl von Taschen (6) des hergestellten Streifenelements (2) festlegt.

17. Verfahren nach Anspruch 16, wobei die Abstandshaltereinheit (132) ein zentrales Element (160) umfasst, das sich um eine erste Achse (165) dreht, die orthogonal zu der gemeinsamen Prozessrichtung (101) verläuft, wobei jeder der mehreren Abstandshalter (163) an dem zentralen Element (160) angebracht ist und sich relativ zu der ersten Achse (165) radial nach außen erstreckt, wobei jeder Abstandshalter (163) einen in Radialrichtung länglichen Verbindungsabschnitt (164) umfasst, der an dem zentralen Element (160) der Abstandshaltereinheit (132) angebracht ist, und eine distale Spitze (166) an einem radialen Ende des Verbindungsabschnitts (164) umfasst, wobei die distale Spitze (166) breiter als der Verbindungsabschnitt (164) ist.

18. Verfahren nach einem der Ansprüche 15 bis 17, wobei die ersten Überlappungsabschnitte (16) mittels einer Walzenpresse (126), die durch eine erste Walze (122) und eine zweite Walze (124) der Presseinheit (120) gebildet ist, nacheinander gegen die zweiten Überlappungsabschnitte (18) gepresst werden, während das erste wandbildende Element (12) und das zweite wandbildende Element (14) entlang der gemeinsamen Prozessrichtung (101) durch die Walzenpresse (126) hindurchlaufen.

19. Verfahren nach Anspruch 18, wobei mindestens einer der ersten Überlappungsabschnitte (16) des ersten wandbildenden Elements (12) durch mindestens einen radial erhabenen Pressabschnitt (146) mindestens einer Walze, ausgewählt aus der ersten Walze (122) und der zweiten Walze (124), die ferner mindestens einen radial abgesenkten taschenbildenden Abschnitt (144) umfasst, gegen mindestens einen der zweiten Überlappungsabschnitte (18) des zweiten wandbildenden Elements (14) gepresst wird, wobei jeder taschenbildende Abschnitt (144) eine Einführöffnung (145) umfasst, die aus einer oder beiden axialen Richtungen der mindestens einen Walze (122; 124) zugänglich ist, wobei sich der radial erhabene Pressabschnitt (146) entlang einer Umfangsrichtung um die mindestens eine Walze (122; 124) axial hin und her erstreckt, und/oder wobei der radial erhabene Pressabschnitt (146) den radial abgesenkten taschenbildenden Abschnitt (144) in einer Umfangsrichtung und/oder einer axialen Richtung der mindestens einen Walze (122; 124) teilweise umschließt.

20. Verfahren nach zumindest den Ansprüchen 15 und 19, wobei der mindestens eine Abstandshalter (163) vorübergehend zwischen das erste wandbildende Element (12) und das zweite wandbildende Element (14) durch die Einführöffnung (145) in den mindestens einen radial abgesenkten taschenbildenden Abschnitt (144) eingeführt wird, um die dritten Überlappungsabschnitte (20) nacheinander von den vierten Überlappungsabschnitten (22) zu beabstanden, während die ersten Überlappungsabschnitte (16) nacheinander gegen die zweiten Überlappungsabschnitte (18) gepresst werden.

## Revendications

1. Système (100; 200) configuré pour fabriquer un élément en bande (2), l'élément en bande (2) formant une pluralité de poches (6) disposées successivement les unes après les autres dans une direction longitudinale (8) de l'élément en bande (2), chaque poche (6) comportant une ouverture (10) à travers laquelle une bouture non racinée (4) peut être insérée pour être enracinée à l'intérieur de ladite poche (6), l'élément en bande (2) comprenant un premier élément formant paroi (12) et un deuxième élément formant paroi (14), le premier élément formant paroi (12) comportant des premières parties de chevauchement (16) qui chevauchent et sont fixées à des deuxièmes parties de chevauchement (18) du deuxième élément formant paroi (14) afin de délimiter la pluralité de poches (6), le premier élément formant paroi (12) comportant des troisièmes parties de chevauchement (20) qui chevauchent des quatrièmes parties de chevauchement (22) du deuxième élément formant paroi (14) tout en étant espacées de celles-ci, les troisièmes parties de chevauchement (20) et les quatrièmes parties de chevauchement (22) formant les parois latérales de la pluralité de poches (6), le système (100 ; 200) comprenant:
une unité de pressage (120) conçue pour recevoir le premier élément formant paroi (12) et le deuxième élément formant paroi (14), et conçue pour presser les premières parties de chevauchement (16) contre les deuxièmes parties de chevauchement (18); et
une unité d'espacement (132) conçue pour espacer temporairement les troisièmes parties de chevauchement (20) d'une distance prédéfinie par rapport aux quatrièmes parties de chevauchement (22),
dans lequel l'unité de pressage (120) est conçue pour presser successivement les premières parties de chevauchement (16) contre les deuxièmes parties de chevauchement (18), l'unité d'espacement (132) étant conçue pour espacer successivement les troisièmes parties de chevauchement (20) d'une distance prédéfinie par rapport aux quatrièmes parties de chevauchement (22) tandis que l'unité de pressage presse successivement les premières parties de chevauchement (16) contre les deuxièmes parties de chevauchement (18).

2. Système (100; 200) selon la revendication 1, dans lequel l'unité de pressage (120) est conçue pour fixer les premières parties de chevauchement (16) aux deuxièmes parties de chevauchement (18) en activant sélectivement un adhésif déposé sur les premières parties de chevauchement (16) et/ou les deuxièmes parties de chevauchement (18).

3. Système (100; 200) selon l'une quelconque des revendications 1 à 2, comprenant en outre une unité de chauffage (128) conçue pour chauffer au moins une partie de l'unité de pressage (120), laquelle partie de l'unité de pressage (120) est conçue pour entrer en contact avec les premières parties de chevauchement (16) et/ou les deuxièmes parties de chevauchement (18) pour presser les premières parties de chevauchement (16) contre les deuxièmes parties de chevauchement (18).

4. Système (100; 200) selon l'une quelconque des revendications 1 à 3, comprenant en outre une unité de dépôt d'adhésif (112) disposée en amont de l'unité de pressage (120) et conçue pour déposer successivement un adhésif thermocollant sur au moins les premières parties de chevauchement (16) du premier élément formant paroi (12) et/ou au moins les deuxièmes parties de chevauchement (18) du deuxième élément formant paroi (14).

5. Système selon l'une quelconque des revendications 1 à 4, configuré de telle sorte que le premier élément formant paroi et le deuxième élément formant paroi soient déplacés le long d'une direction de traitement commune (101) tandis que l'unité de pressage (120) presse successivement les premières parties de chevauchement (16) contre les deuxièmes parties de chevauchement (18) et tandis que l'unité d'espacement écarte successivement les troisièmes parties de chevauchement (20) à la distance prédéfinie des quatrièmes parties de chevauchement (22), dans lequel l'unité d'espacement (132) comprend au moins un écarteur (163) définissant la distance prédéfinie, dans lequel l'unité d'espacement (132) est conçue pour insérer temporairement l'au moins un écarteur (163) entre les troisièmes parties en chevauchement (20) et les quatrièmes parties en chevauchement (22) à partir d'une direction différente de la direction commune de processus (101) afin d'écarter successivement les troisièmes parties en chevauchement (20) des quatrièmes parties en chevauchement (22) tandis que l'unité de pressage (120) presse successivement les premières parties en chevauchement (16) contre les deuxièmes parties en chevauchement (18).

6. Système (100; 200) selon la revendication 5, dans lequel l'au moins un écarteur (163) comprend plusieurs écarteurs (163) et l'unité d'espacement (132) est conçue pour insérer les plusieurs écarteurs (163) successivement entre les troisièmes parties de chevauchement (20) et les quatrièmes parties de chevauchement (22) tandis que l'unité de pressage (120) presse successivement les premières parties de chevauchement (16) contre les deuxièmes parties de chevauchement (18), dans lequel chaque écarteur (163) est éventuellement conçu pour délimiter un volume intérieur de l'une parmi la pluralité de poches (6) de l'élément en bande fabriqué (2).

7. Système (100; 200) selon la revendication 6, dans lequel l'unité d'espacement (132) comprend un élément central (160) conçu pour, pendant le fonctionnement du système (100; 200), tourner autour d'un premier axe orthogonal à la direction commune de processus (101), dans lequel chacun des multiples écarteurs (163) est fixé à l'élément central (160) et s'étend radialement vers l'extérieur par rapport au premier axe (165), chaque écarteur (163) comprenant:
une section de liaison allongée radialement (164) fixée à l'élément central (160) de l'unité d'espacement (132); et
une extrémité distale (166) située à l'extrémité radiale de la section de liaison (164), l'extrémité distale (166) étant plus large que la section de liaison (164).

8. Système (100; 200) selon l'une quelconque des revendications 5 à 7, dans lequel l'unité de pressage (120) comprend un premier rouleau (122) et un deuxième rouleau (124) formant une presse à rouleaux (126) conçue pour presser successivement les premières parties en chevauchement (16) contre les deuxièmes parties en chevauchement (18) tandis que le premier élément formant paroi (12) et le deuxième élément formant paroi (14) traversent la presse à rouleaux (126) le long de la direction commune de processus (101).

9. Système (100; 200) selon la revendication 8, dans lequel au moins un rouleau, sélectionné parmi le premier rouleau (122) et le deuxième rouleau (124), comprend au moins une partie formant poche (144) abaissée radialement et au moins une partie de pressage (146) surélevée radialement (146) conçue pour presser au moins l'une des premières parties de chevauchement (16) du premier élément formant paroi (12) contre au moins l'une des deuxièmes parties de chevauchement (18) du deuxième élément formant paroi (14), dans lequel chaque partie formant poche (144) comprend une ouverture d'insertion (145) accessible depuis l'une ou les deux directions axiales de l'au moins un rouleau (122; 124), la partie de pression surélevée radialement (146) s'étendant axialement d'avant en arrière selon une direction circonférentielle autour de l'au moins un rouleau (122; 124), et/ou dans lequel la partie de pression surélevée radialement (146) entoure, en partie, la partie formant poche abaissée radialement (144) dans une direction circonférentielle et/ou axiale de l'au moins un rouleau (122; 124).

10. Système (100; 200) selon au moins les revendications 5 et 9, dans lequel l'unité d'espacement (132) est conçue pour insérer temporairement l'au moins un écarteur (163) entre le premier élément formant paroi (12) et le deuxième élément formant paroi (14) à travers l'ouverture d'insertion (145) dans l'au moins une partie formant poche abaissée radialement (144) afin d'espacer successivement les troisièmes parties de chevauchement (20) des quatrièmes parties de chevauchement (22) tandis que l'unité de pressage (120) presse successivement les premières parties de chevauchement (16) contre les deuxièmes parties de chevauchement (18).

11. Procédé de fabrication d'un élément en bande (2), l'élément en bande (2) formant une pluralité de poches (6) disposées successivement les unes après les autres dans une direction longitudinale (8) de l'élément en bande (2), chaque poche (6) comportant une ouverture (10) à travers laquelle une bouture non racinée (4) peut être insérée pour être enracinée à l'intérieur de ladite poche (6), l'élément en bande (2) comprenant un premier élément formant paroi (12) et un deuxième élément formant paroi (14), le premier élément formant paroi (12) comportant des premières parties de chevauchement (16) qui chevauchent et sont fixées à des deuxièmes parties de chevauchement (18) du deuxième élément formant paroi (14) afin de délimiter la pluralité de poches (6), le premier élément formant paroi (12) comportant des troisièmes parties de chevauchement (20) qui chevauchent des quatrièmes parties de chevauchement (22) du deuxième élément formant paroi (14) tout en étant espacées de celles-ci, les troisièmes parties de chevauchement (20) et les quatrièmes parties de chevauchement (22) formant les parois latérales de la pluralité de poches (6), le procédé comprenant:
la réception, par une unité de pressage (120), le premier élément formant paroi (12) et le deuxième élément formant paroi (14); et
le pressage (1106), par l'unité de pressage (120), des premières parties de chevauchement (16) contre les deuxièmes parties de chevauchement (18) tout en écartant temporairement, à l'aide d'une unité d'espacement (132), les troisièmes parties de chevauchement (20) à une distance prédéfinie des quatrièmes parties de chevauchement (22), dans lequel les premières parties de chevauchement (16) sont pressées successivement contre les deuxièmes parties de chevauchement (18), et dans lequel les troisièmes parties de chevauchement (20) sont successivement espacées de la distance prédéfinie par rapport aux quatrièmes parties de chevauchement (22) tandis que les premières parties de chevauchement (16) sont pressées contre les deuxièmes parties de chevauchement (18).

12. Procédé selon la revendication 11, dans lequel les premières parties de chevauchement (16) sont fixées aux deuxièmes parties de chevauchement (18) par activation sélective, par l'unité de pressage (120), d'un adhésif déposé sur les premières parties de chevauchement (16) et/ou les deuxièmes parties de chevauchement (18).

13. Procédé selon l'une quelconque des revendications 11 à 12, comprenant en outre:
le chauffage d'au moins une partie de l'unité de pressage (120), laquelle partie de l'unité de pressage (120) entre en contact avec les premières parties de chevauchement (16) et/ou les deuxièmes parties de chevauchement (18) pour presser les premières parties de chevauchement (16) contre les deuxièmes parties de chevauchement (18).

14. Procédé selon l'une quelconque des revendications 11 à 13, comprenant en outre:
le dépôt successif (1104) d'un adhésif thermocollant (114) sur au moins les premières parties en chevauchement (16) du premier élément formant paroi (12) et/ou sur au moins les deuxièmes parties en chevauchement (18) du deuxième élément formant paroi (14).

15. Procédé selon l'une quelconque des revendications 11 à 14, dans lequel le premier élément formant paroi (12) et le deuxième élément formant paroi (14) sont déplacés (1102) le long d'une direction commune de traitement (101) tandis que les premières parties de chevauchement (16)sont successivement pressées contre les deuxièmes parties de chevauchement (18) et tandis que les troisièmes parties de chevauchement (20) sont successivement espacées à la distance prédéfinie des quatrièmes parties de chevauchement (22), dans lequel la distance prédéfinie est définie par au moins un écarteur (163) de l'unité d'espacement (132), dans lequel l'au moins un écarteur (163) est temporairement inséré entre les troisièmes parties en chevauchement (20) et les quatrièmes parties en chevauchement (22) à partir d'une direction différente de la direction commune de processus (101) afin d'écarter successivement les troisièmes parties en chevauchement (20) des quatrièmes parties en chevauchement (22) tandis que les premières parties de chevauchement (16) sont successivement pressées contre les deuxièmes parties de chevauchement (18).

16. Procédé selon la revendication 15, dans lequel l'au moins un écarteur (163) comprend plusieurs écarteurs (163) et les plusieurs écarteurs (163) sont successivement insérés entre les troisièmes parties de chevauchement (20) et les quatrièmes parties de chevauchement (22) tandis que les premières parties de chevauchement (16) sont successivement pressées contre les deuxièmes parties de chevauchement (18), dans lequel chaque écarteur (163) délimite éventuellement un volume intérieur de l'une parmi la pluralité de poches (6) de l'élément en bande fabriqué (2).

17. Procédé selon la revendication 16, dans lequel l'unité d'espacement (132° comprend un élément central (160) qui tourne autour d'un premier axe (165) orthogonal à la direction commune de processus (101), chacun des multiples espaceurs (163) est fixé à l'élément central (160) et s'étend radialement vers l'extérieur par rapport au premier axe (165), chaque espaceur (163) comprenant une section de liaison allongée radialement (164) fixée à l'élément central (160) de l'unité d'espacement (132), et comprend une extrémité distale (166) située à l'extrémité radiale de la section de liaison (164), l'extrémité distale (166) étant plus large que la section de liaison (164).

18. Procédé selon l'une quelconque des revendications 15 à 17, dans lequel les premières parties de chevauchement (16) sont successivement pressées contre les deuxièmes parties de chevauchement (18) par une presse à rouleaux (126) formée par un premier rouleau (122) et un deuxième rouleau (18) de l'unité de pressage (120) tandis que le premier élément formant paroi (12) et le deuxième élément formant paroi (14) traversent la presse à rouleaux (126) le long de la direction commune de processus (101).

19. Procédé selon la revendication 18, dans lequel au moins l'une des premières parties de chevauchement (16) du premier élément formant paroi (12) est pressée contre au moins l'une des deuxièmes parties de chevauchement (18) du second élément formant paroi (14) par au moins une partie de presse surélevée radialement (146) d'au moins un rouleau, sélectionné parmi le premier rouleau (122) et le deuxième rouleau (124), qui comprend en outre au moins une partie formant poche (144) abaissée radialement, chaque partie formant poche (144) comportant une ouverture d'insertion (145) accessible à partir de l'une ou des deux directions axiales de l'au moins un rouleau (122; 124), la partie de presse surélevée radialement (146) s'étendant axialement d'avant en arrière selon une direction circonférentielle autour de l'au moins un rouleau (122; 124), et/ou dans lequel la partie de presse surélevée radialement (146) entoure partiellement la partie formant poche abaissée radialement (144) dans une direction circonférentielle et/ou axiale de l'au moins un rouleau (122; 124).

20. Procédé selon au moins les revendications 15 et 19, dans lequel l'au moins un espaceur (163) est temporairement inséré entre le premier élément formant paroi (12) et le deuxième élément formant paroi (14) dans l'ouverture d'insertion (145) dans l'au moins une partie formant poche abaissée radialement (144) afin d'espacer successivement les troisièmes parties de chevauchement (20) des quatrièmes parties de chevauchement (22) tandis que les premières parties de chevauchement (16) sont successivement pressées contre les deuxièmes parties de chevauchement (18).
